# EUROPEAN PATENT SPECIFICATION

(11) **EP 4 579 892 B1**
(45) Date of publication and mention of the grant of the patent: **20.05.2026**
(21) Application number: 24223515.8
(22) Date of filing: 27.12.2024
(51) Int. Cl.: H01M 50/105, H01M 50/178, H01M 50/186, H01M 50/553, H01M 50/566

(54) **SECONDARY BATTERY AND ELECTRONIC APPARATUS**
SEKUNDÄRBATTERIE UND ELEKTRONISCHE VORRICHTUNG
BATTERIE SECONDAIRE ET APPAREIL ÉLECTRONIQUE

(30) Priority: 29.12.2023 CN 202311872287
(43) Date of publication of application: 02.07.2025
(73) Proprietor: NINGDE AMPEREX TECHNOLOGY LIMITED, Ningde City, Fujian Province 352100 (CN)
(72) Inventor: ZHANG, Yanbin, Ningde City, Fujian Province, People s Republic of China, 352100 (CN)
(74) Representative: Icosa

(56) References cited:
- CN-A- 115 552 720
- JP-A- 2023 143 964

## Description

### TECHNICAL FIELD

This application relates to the field of energy storage technologies, and in particular, to a secondary battery and an electronic apparatus.

### BACKGROUND

A secondary battery, as a power source of an electronic apparatus, is crucial for ensuring normal use of the electronic apparatus. Increasingly high popularity of electronic apparatuses such as mobile phones and laptops results in more complicated operating conditions of the electronic apparatuses. Therefore, increasingly high requirements are imposed on the reliability of secondary batteries.

An electrode terminal is a conductive structure that is electrically connected to an electrode assembly of a secondary battery so as to guide electrical energy to an external circuit. Currently, when a secondary battery receives an impact, a connection region between an electrode terminal and an electrode assembly is prone to breakage or disconnection, affecting charge and discharge of the secondary battery, thus reducing the reliability. Relevant state of the art is known from documents JP 2023 143964 A and CN 115 552 720 A.

### SUMMARY

In view of this, this application provides a secondary battery and an electronic apparatus, helping to improve the reliability of the secondary battery.

According to a first aspect, this application provides a secondary battery. The secondary battery includes an electrode assembly, an electrode terminal, and a sealing member. The electrode terminal includes a first portion and a second portion. The first portion and the second portion are arranged in a first direction. The first portion is connected to the electrode assembly and has a first connection region, and the second portion is connected to the electrode assembly and has a second connection region. The sealing member is connected to the electrode terminal, where the sealing member is disposed on one side of the electrode assembly in a second direction, and the first direction is perpendicular to the second direction. In an extension direction of the electrode terminal, the first connection region has a first edge away from the sealing member and a second edge close to the sealing member; the second connection region has a third edge away from the sealing member and a fourth edge close to the sealing member; and in the extension direction of the electrode terminal, a minimum distance between the first edge and the third edge is D₁, a minimum distance between the second edge and the fourth edge is D₂, and at least one of D₁ or D₂ is greater than 0.

In the foregoing embodiment, the first portion and the second portion are provided, and the edges of the first connection region and the second connection region are staggered, such that tension regions between the electrode terminal and the electrode assembly are separated, reducing the risk of simultaneous disconnection of the first connection region and the second connection region, and increasing the possibility of maintained connection between the electrode terminal and the electrode assembly when the secondary battery faces situations such as impact and bending of the electrode terminal, thereby reducing the influence of the above situations on charging, discharging, lithium precipitation, and the like on the secondary battery, and improving the reliability of the secondary battery.

In the foregoing one or more embodiments, D₁>0 and D₂>0.

In the foregoing embodiment, when the conditions D₁>0 and D₂>0 are satisfied, the first edge and the third edge are staggered, and the second edge and the fourth edge are staggered, playing a more significant separation effect on the tension regions between the electrode terminal and the electrode assembly, thereby helping to further improve the reliability of the secondary battery.

In the foregoing one or more embodiments, in the extension direction of the electrode terminal, a length of the first connection region is L₁, a length of the second connection region is L₂, L₁>D₁ and L₂>D₁.

In the foregoing embodiment, when conditions L₁>D₁ and L₂>D₁ are satisfied, a distance by which the first connection region and the second connection region are staggered in the extension direction of the electrode terminal is not greater than the length of any one of the connection regions, such that the first connection region and the second connection region are not entirely staggered, helping to reduce a length occupied by both the two connection regions. When a region, which may be connected to the electrode terminal, on the electrode assembly is fixed, the above conditions being satisfied helps to reduce the lengths of the first connection region and the second connection region, thereby improving the stability of the connection between the electrode terminal and the electrode assembly, and thus improving the reliability of the secondary battery.

In the foregoing one or more embodiments, 0.5 mm≤L₁≤30 mm and 0.5 mm≤L₂≤30mm.

In the foregoing embodiment, the above conditions being satisfied helps to increase a connection area between the first portion and the electrode assembly and a connection area between the second portion and the electrode assembly, thereby reducing the risk of short circuit of the secondary battery caused by separation of the electrode terminal and the electrode assembly.

In the foregoing one or more embodiments, in the first direction, a gap is provided between the first portion and the second portion.

In the foregoing embodiment, the gap separates the first portion and the second portion, helping to reduce mutual influence between the first portion and the second portion, helping to reduce the risk of the first portion and the second portion being welded together, and also helping to reduce the risk of mutual force transmission between the first portion and the second portion due to contact.

In the foregoing one or more embodiments, in the first direction, a minimum width of the gap is W₁, 5 mm≥W₁≥0.5 mm.

In the foregoing embodiment, the minimum width W₁ satisfying 3 mm≥W₁≥0.5 mm helps to further increase widths of the first portion and the second portion in the first direction, can enhance the structural strength of the first portion and the second portion, also helps to increase areas of the first connection region and the second connection region, reduces the risk of breakage of the first connection region and the second connection region, and also helps to isolate spreading of cracks, thereby improving the reliability of the secondary battery.

In the foregoing one or more embodiments, the electrode assembly includes an electrode plate, the electrode plate includes a current collector and an active substance layer, and the active substance layer is disposed on the current collector. The active substance layer is provided with a first groove, and the first groove exposes the current collector. At least a part of the first portion and at least a part of the second portion are located in the first groove and connected to the current collector in the first groove. In the second direction, a width of the first groove is T₁, a length of an orthographic projection of the first portion on the electrode plate in the second direction is T₂, and a length of an orthographic projection of the second portion on the electrode plate in the second direction is T₃, T₁-0.5 mm≥T₂≥T₁-5 mm and T₁-0.5 mm≥T₃≥T₁-5 mm.

In the foregoing embodiment, the condition T₁-0.5 mm≥T₂≥T₁-5 mm and T₁-0.5 mm≥T₃≥T₁-5 mm being satisfied helps to reduce the risk of contact between the first and second portions and the active substance layer when the secondary battery is subject to an impact.

In the foregoing one or more embodiments, the electrode assembly is welded to the first portion and the second portion, a plurality of first weld marks are provided between the electrode assembly and the first portion, and the plurality of first weld marks are located in the first connection region. In the first direction, a width of the first weld mark is S₁, 0.5 mm≤S₁≤8 mm.

In the foregoing embodiment, when the length and width of the first weld mark satisfy the above conditions, a welded region is not too small, helping to enhance the welding strength and improve the stability of connection between the electrode terminal and the electrode assembly; moreover, the welded region is not too large, helping to reduce the risk of a failure in effective welding and the risk of structural strength reduction of the electrode terminal, thereby improving the welding effect.

In the foregoing one or more embodiments, a plurality of second weld marks are provided between the electrode assembly and the second portion, and the plurality of second weld marks are located in the second connection region. The plurality of first weld marks are arranged along the extension direction of the electrode terminal, and the plurality of second weld marks are arranged along the extension direction of the electrode terminal. In the extension direction of the electrode terminal, a distance between any adjacent two of the first weld marks is D₃, and a distance between any adjacent two of the second weld marks is D₄, 0.5 mm≤D₃≤3 mm and 0.5 mm≤D₄≤3 mm.

In the foregoing embodiment, when D₃ and D₄ satisfy the above conditions, distances between the plurality of first weld marks and distances between the plurality of second weld marks are unlikely to be too large such that the first weld marks and the second weld marks are unlikely to crack, thereby, improving the stability of connection between the electrode terminal and the electrode assembly; and the distances between the plurality of first weld marks are also unlikely to be too small so as to prevent difficulty in effective welding, thereby improving the welding effect.

In the foregoing one or more embodiments, in the extension direction of the electrode terminal, a distance between the second edge and the sealing member is less than or equal to a distance between the third edge and the sealing member. In the extension direction of the electrode terminal, a minimum distance between a geometric center of one closest to the second edge of the plurality of first weld marks and a geometric center of one closest to the third edge of the plurality of second weld marks is D₅, 0.5 mm≤D₅≤3 mm.

In the foregoing embodiment, D₅ satisfying the condition 0.5 mm<D₅<3 mm helps to reduce the risk of the structural strength of the electrode terminal being affected by an excessively large welded region and also helps to reduce the risk of unstable connection caused by an excessively small welded region.

In the foregoing one or more embodiments, the electrode assembly includes an electrode plate, the electrode plate includes a current collector, the current collector has a first surface and a second surface opposite to each other, the first portion is connected to the first surface to form the first connection region, and the second portion is connected to the first surface to form the second connection region.

In the foregoing embodiment, the first portion and the second portion are both connected to the first surface, such that the first portion and the second portion are connected to a same side surface of the current collector, reducing a procedure of turning over the secondary battery during connection, reducing the difficulty in connection, and improving the connection efficiency.

In the foregoing one or more embodiments, the electrode assembly includes an electrode plate, the electrode plate includes a current collector, the current collector has a first surface and a second surface opposite to each other, the first portion is connected to the first surface to form the first connection region, and the second portion is connected to the second surface to form the second connection region.

In the foregoing embodiment, the first portion is connected to the first surface, and the second portion is connected to the second surface, such that the first portion and the second portion are connected to different sides of the electrode plate, helping to reduce mutual influence between the first portion and the second portion. For example, the first portion and the second portion being connected to different sides of the electrode plate helps to reduce the risk of the first portion and the second portion being welded together, and also helps to reduce the risk of mutual force transmission between the first portion and the second portion. In addition, the first portion and the second portion being connected to different sides of the electrode plate also helps to disperse the tension regions between the electrode terminal and the electrode assembly.

In the foregoing one or more embodiments, the electrode assembly includes a plurality of stacked electrode plates. The electrode plate includes a current collector, a sub-tab, and an active substance layer. The sub-tab is connected to the current collector, and the active substance layer is disposed on the current collector. A plurality of sub-tabs are stacked and connected to form a tab. The tab has a third surface and a fourth surface opposite to each other. The first portion is connected to the third surface to form the first connection region, and the second portion is connected to the third surface to form the second connection region.

In the foregoing embodiment, the first portion and the second portion are both connected to the third surface, such that the first portion and the second portion are connected to a same side surface of the tab, reducing a procedure of turning over the secondary battery during connection, reducing the difficulty in connection, and improving the connection efficiency.

In the foregoing one or more embodiments, the electrode assembly includes a plurality of stacked electrode plates. The electrode plate includes a current collector, a sub-tab, and an active substance layer. The sub-tab is connected to the current collector, and the active substance layer is disposed on the current collector. A plurality of sub-tabs are stacked and connected to form a tab. The tab has a third surface and a fourth surface opposite to each other. The first portion is connected to the third surface to form the first connection region, and the second portion is connected to the fourth surface to form the second connection region.

In the foregoing embodiment, the first portion is connected to the third surface, and the second portion is connected to the fourth surface, such that the first portion and the second portion are connected to different sides of the tab, helping to reduce mutual influence between the first portion and the second portion. For example, the first portion and the second portion being connected to different sides of the tab helps to reduce the risk of the first portion and the second portion being welded together, and also helps to reduce the risk of mutual force transmission between the first portion and the second portion. In addition, the first portion and the second portion being connected to different sides of the tab also helps to disperse the tension regions between the electrode terminal and the electrode assembly.

In the foregoing one or more embodiments, the electrode terminal further includes a third portion. The third portion connects the first portion and the second portion. The third portion is connected to the sealing member, and the third portion is configured to be connected to an external device.

In the foregoing embodiment, the third portion provided helps to enhance the integrity of the electrode terminal and also facilitates the connection between the electrode terminal and the external device.

In the foregoing one or more embodiments, the first portion and the second portion are separated, and the sealing member connects the first portion and the second portion.

In the foregoing embodiment, the first portion and the second portion being completely separated helps to further reduce the mutual influence between the first portion and the second portion, helps to reduce the risk of mutual force transmission between the first portion and the second portion, and helps to further improve the reliability of the secondary battery.

According to a second aspect, this application further provides an electronic apparatus including the secondary battery as described in any one of the foregoing embodiments.

In the foregoing embodiments, situations of complete disconnection of the electrode assembly and the electrode terminal of the secondary battery are reduced, enabling charging and discharging to be continued, such that the reliability of the secondary battery is improved, thereby helping to improve the use reliability and service life of the electronic apparatus.

The secondary battery in this application includes an electrode assembly, an electrode terminal, and a sealing member. A first portion of the electrode terminal is connected to the electrode assembly and has a first connection region, and a second portion of the electrode terminal is connected to the electrode assembly and has a second connection region. In an extension direction of the electrode terminal, a minimum distance between a first edge of the first connection region and a third edge of the second connection region is D₁, and a minimum distance between a second edge of the first connection region and a fourth edge of the second connection region is D₂. At least one of D₁ or D₂ is greater than 0, such that tension regions between the electrode terminal and the electrode assembly are separated, reducing the risk of simultaneous disconnection of the first connection region and the second connection region, and increasing the possibility of maintained connection between the electrode terminal and the electrode assembly when the secondary battery experiences situations such as impact and bending of the electrode terminal, thereby improving the reliability of the secondary battery.

### BRIEF DESCRIPTION OF DRAWINGS

FIG. 1 is a schematic structural diagram of a secondary battery according to an embodiment of this application;
FIG. 2 is a schematic exploded view of the secondary battery in FIG. 1;
FIG. 3 is a schematic diagram of an electrode plate and an electrode terminal according to an embodiment of this application;
FIG. 4 is a schematic diagram of connection of an electrode terminal according to an embodiment of this application;
FIG. 5 is a schematic diagram of connection of an electrode terminal according to another embodiment of this application;
FIG. 6 is a schematic diagram of connection of an electrode terminal according to still another embodiment of this application;
FIG. 7 is a cross-sectional view of connection between an electrode terminal and an electrode plate according to an embodiment of this application;
FIG. 8 is a schematic diagram of connection between an electrode terminal and an electrode plate according to another embodiment of this application;
FIG. 9 is a cross-sectional view of connection between an electrode terminal and an electrode plate according to another embodiment of this application;
FIG. 10 is a schematic diagram of connection of an electrode terminal according to an embodiment of this application;
FIG. 11 is a schematic diagram of connection of an electrode terminal according to another embodiment of this application;
FIG. 12 is a schematic structural diagram of a secondary battery with a housing omitted according to an embodiment of this application;
FIG. 13 is a schematic partial structural diagram of a secondary battery with a housing omitted according to an embodiment of this application;
FIG. 14 is a partial cross-sectional view of a secondary battery according to an embodiment of this application;
FIG. 15 is a partial cross-sectional view of a secondary battery according to another embodiment of this application;
FIG. 16 is a schematic diagram of connection between an electrode terminal and an electrode plate according to still another embodiment of this application; and
FIG. 17 is a schematic diagram of an electronic apparatus according to an embodiment of this application.

Description of reference signs of main components:

| | |
|---|---|
| secondary battery | 100 |
| electrode assembly | 10 |
| electrode plate | 11 |
| current collector | 111 |
| first surface | 1111 |
| second surface | 1112 |
| active substance layer | 112 |
| first groove | 113 |
| tab | 12 |
| sub-tab | 12a |
| bent portion | 121 |
| connection portion | 122 |
| third surface | 123 |
| fourth surface | 124 |
| electrode terminal | 20 |
| first portion | 21 |
| first connection region | 211 |
| first edge | 2111 |
| second edge | 2112 |
| second portion | 22 |
| second connection region | 221 |
| third edge | 2211 |
| fourth edge | 2212 |
| gap | 23 |
| third portion | 24 |
| sealing member | 30 |
| housing | 40 |
| main body portion | 41 |
| sealing portion | 42 |
| first packaging portion | 43 |
| second packaging portion | 44 |
| first weld mark | 50 |
| second weld mark | 60 |
| first insulator | 70 |
| second insulator | 80 |
| apparatus body | 200 |
| electronic apparatus | 1000 |
| first direction | X |
| second direction | Y |
| third direction | Z |

### DETAILED DESCRIPTION

The following describes technical solutions in some embodiments of this application with reference to the accompanying drawings in these embodiments of this application. Apparently, the described embodiments are only some rather than all of the embodiments of this application.

It should be noted that, when one component is deemed as being "connected to" another component, it may be directly connected to the another component, or there may be a component in between. When one component is assumed as being "disposed on/in" another component, the component may be provided directly on/in the another component or with a component possibly present therebetween.

Unless otherwise specified, the term "a plurality of" used herein refers to two or more than two.

The terms "first", "second", and the like are merely used to distinguish between different objects, and shall not be understood as any indication or implication of relative importance or any implicit indication of the number, specific sequence, or primary-secondary relationship of the technical features indicated.

The term "perpendicular" is used to describe an ideal state between two parts. During actual production or use, two components may be approximately perpendicular or equal to each other. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further indicate that an included angle between a straight line and a plane is within a range of 90°±10°.

It should be noted that when a parameter is greater than, equal to, or less than an endpoint value, it should be understood that the endpoint value is allowed to have a tolerance of ±2%.

It should be learned that sizes of layers, regions, films, plates, blocks, columns, protrusions, and depressions shown in the accompanying drawings are provided for a better understanding and a more convenient description, but this application is not limited to the sizes shown in the accompanying drawings. To make this application clear, elements irrelevant to the description are omitted from the details of the specification.

Unless otherwise defined, all technical and scientific terms used herein shall have the same meanings as commonly understood by persons skilled in the art to which this application belongs. The terms used herein in the specification of this application are intended to merely describe specific embodiments rather than to limit this application.

This application provides a secondary battery. The secondary battery includes an electrode assembly, an electrode terminal, and a sealing member. The electrode terminal includes a first portion and a second portion. The first portion and the second portion are arranged in a first direction. The first portion is connected to the electrode assembly and has a first connection region, and the second portion is connected to the electrode assembly and has a second connection region. The sealing member is connected to the electrode terminal, where the sealing member is disposed on one side of the electrode assembly in a second direction, and the first direction is perpendicular to the second direction. In an extension direction of the electrode terminal, the first connection region has a first edge away from the sealing member and a second edge close to the sealing member; the second connection region has a third edge away from the sealing member and a fourth edge close to the sealing member; and in the extension direction of the electrode terminal, a minimum distance between the first edge and the third edge is D₁, a minimum distance between the second edge and the fourth edge is D₂, and at least one of D₁ or D₂ is greater than 0.

The electrode terminal includes the first portion and the second portion that are both connected to the electrode assembly, and the edges of the first connection region and the second connection region are staggered, such that tension regions between the electrode terminal and the electrode assembly are separated, reducing the risk of simultaneous disconnection of the first connection region and the second connection region, and increasing the possibility of maintained connection between the electrode terminal and the electrode assembly when the secondary battery experiences situations such as impact and bending of the electrode terminal, thereby reducing the influence of the above situations on charging, discharging, lithium precipitation, and the like on the secondary battery, and improving the reliability of the secondary battery.

The following describes some embodiments of this application with reference to the accompanying drawings. Without conflicts, the following embodiments and features in these embodiments may be combined.

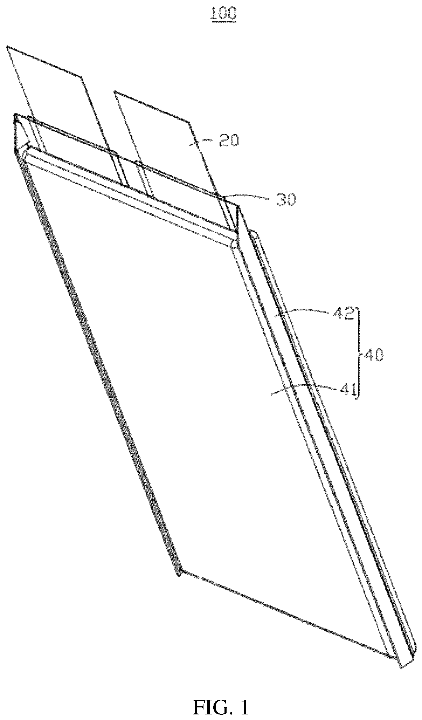

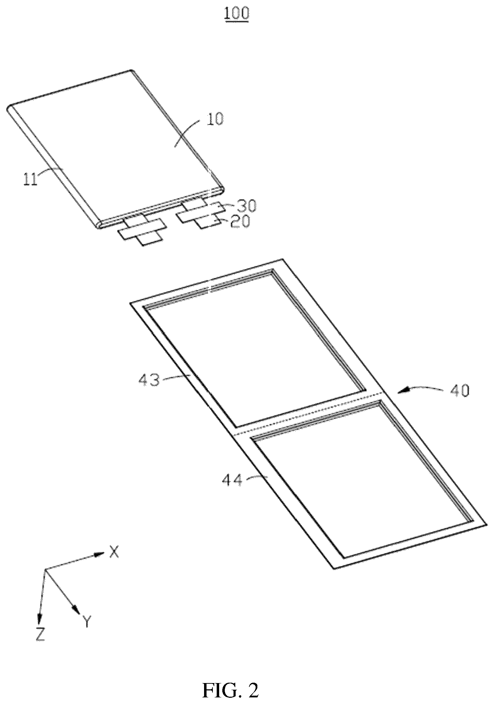

Referring to FIG. 1 and FIG. 2, an embodiment of this application provides a secondary battery 100. The secondary battery 100 includes an electrode assembly 10, an electrode terminal 20, and a sealing member 30. The electrode terminal 20 is connected to the electrode assembly 10 and is configured to lead out polarity of the electrode terminal 20 to an external circuit. The sealing member 30 is connected to the electrode terminal 20 and is configured to seal the electrode assembly 10 and a part of the electrode terminal 20 inside a packaging bag in cooperation with the packaging bag while the electrode assembly 10 is packaged.

In some embodiments, the secondary battery 100 is a lithium-ion battery.

In some embodiments, the electrode assembly 10 includes a plurality of electrode plates 11 and a separator (not shown in the figure). The electrode plates 11 include a positive electrode plate and a negative electrode plate, and a separator is disposed between the positive electrode plate and the negative electrode plate.

In some embodiments, the positive electrode plate, the separator, and the negative electrode plate are stacked to form a stacked structure; and in some other embodiments, the positive electrode plate, the separator, and the negative electrode plate are stacked and then wound to form a wound structure.

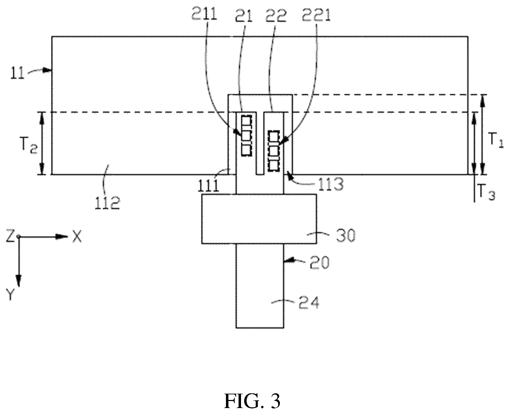

In some embodiments, referring to FIG. 3, the electrode plate 11 includes a current collector 111 and an active substance layer 112 disposed on the current collector 111.

In some embodiments, the positive electrode plate includes a positive electrode current collector and a positive electrode active substance layer disposed on the positive electrode current collector; and the negative electrode plate includes a negative electrode current collector and a negative electrode active substance layer disposed on the negative electrode current collector.

In some embodiments, the positive electrode active substance layer may be directly disposed on a surface of the positive electrode current collector, or a transition layer may be disposed between the positive electrode active substance layer and the positive electrode current collector; and the negative electrode active substance layer may be directly disposed on a surface of the negative electrode current collector, or a transition layer may be disposed between the negative electrode active substance layer and the negative electrode current collector.

In some embodiments, the current collector 111 is a metal layer. As an illustrative example, the positive electrode current collector may be a metal layer including at least one of aluminum, nickel, tantalum, or titanium, for example, an aluminum foil. The negative electrode current collector may be a metal layer including at least one of copper, nickel, tantalum, or titanium, for example, a copper foil.

In other embodiments, the current collector 111 may be a composite current collector 111 formed by a metal layer and another material layer.

In some embodiments, the positive electrode active substance layer includes a positive electrode active material, where the positive electrode active material may include at least one of lithium cobalt oxide, lithium nickel cobalt manganese oxide, lithium nickel cobalt aluminum oxide, lithium iron phosphate, lithium manganese iron phosphate, or lithium manganese oxide. The negative electrode active substance layer includes a negative electrode active material, where the negative electrode active material may include at least one of graphite, hard carbon, soft carbon, silicon, silicon-oxygen material, or silicon-carbon material.

Referring to FIG. 3, the electrode terminal 20 includes a first portion 21 and a second portion 22, where the first portion 21 and the second portion 22 are arranged in a first direction X, the first portion 21 is connected to the electrode assembly 10 and has a first connection region 211, and the second portion 22 is connected to the electrode assembly 10 and has a second connection region 221.

The first connection region 211 is a region part where the first portion 21 is fixed to the electrode assembly 10, and the second connection region 221 is a region part where the second portion 22 is fixed to the electrode assembly 10.

In some embodiments, the first portion 21 is welded to the electrode assembly 10, and a welded region formed between the first portion 21 and the electrode assembly 10 overlaps with the first connection region 211. The second portion 22 is welded to the electrode assembly 10, and a welded region formed between the second portion 22 and the electrode assembly 10 overlaps with the second connection region 221.

In some embodiments, the electrode terminal 20 is connected to the positive electrode plate 11 or the negative electrode plate 11. When the first portion 21 and the second portion 22 of the electrode terminal 20 are connected to the positive electrode plate 11, the electrode terminal 20 has a positive polarity. When the electrode terminal 20 is connected to the negative electrode plate 11, the electrode terminal 20 has a negative polarity.

In some embodiments, the electrode terminal 20 is a metal sheet, and the electrode terminal 20 is made of any one of copper, aluminum, or nickel.

In some embodiments, referring to FIG. 1 and FIG. 2, the secondary battery 100 further includes a housing 40, where the electrode assembly 10 is accommodated in the housing 40, and a part of the electrode terminal 20 extends out of the housing 40 and leads the polarity of the electrode assembly 10 out of the housing 40.

In some embodiments, referring to FIG. 1 and FIG. 2, the secondary battery 100 is a pouch battery. The housing 40 includes a main body portion 41 and a sealing portion 42. The main body portion 41 is provided with an electrolyte solution inside, and the electrode assembly 10 is accommodated in the main body portion 41. The sealing portion 42 seals the main body portion 41, and the electrode terminal 20 extends out of the housing 40 through the sealing portion 42. FIG. 2 is a schematic exploded view of the secondary battery 100 in FIG. 1. To make the accompanying drawings clear, the electrolyte solution is omitted in FIG. 2.

In some embodiments, referring to FIG. 1 and FIG. 2, the housing 40 includes a first packaging portion 43 and a second packaging portion 44. One side of the first packaging portion 43 is connected to one side of the second packaging portion 44. A joint of the first packaging portion 43 and the second packaging portion 44 is folded, such that the first packaging portion 43 and the second packaging portion 44 are connected, and the first packaging portion 43 and the second packaging portion 44 enclose the main body portion 41. A part where the first packaging portion 43 and the second packaging portion 44 are connected forms the sealing portion 42.

In some embodiments, the housing 40 is made of an aluminum-plastic film, and the housing 40 serves as a packaging bag for packaging the electrode assembly 10.

Referring to FIG. 2 and FIG. 3, the sealing member 30 is connected to the electrode terminal 20, the sealing member 30 is disposed on one side of the electrode assembly 10 in a second direction Y, and the first direction X is perpendicular to the second direction Y.

In some embodiments, referring to FIG. 2 and FIG. 3, at least a part of the sealing member 30 is disposed in the sealing portion 42, helping to improve the sealing performance for the electrode assembly 10.

In some embodiments, the sealing member 30 is made of plastic or rubber.

Referring to FIG. 3 to FIG. 6, in an extension direction of the electrode terminal 20, the first connection region 211 has a first edge 2111 away from the sealing member 30 and a second edge 2112 close to the sealing member 30, and the second connection region 221 has a third edge 2211 away from the sealing member 30 and a fourth edge 2212 close to the sealing member 30. In the extension direction of the electrode terminal 20, a minimum distance between the first edge 2111 and the third edge 2211 is D₁, a minimum distance between the second edge 2112 and the fourth edge 2212 is D₂, and at least one of D₁ or D₂ is greater than 0.

The secondary battery 100 faces various challenges during production, transportation, or use, for example, impacts caused by a plurality of rounds of drop of the secondary battery 100 or bending of the electrode terminal 20. When the secondary battery 100 is subject to an impact, there is a risk of breakage or disconnection of the connection region between the electrode terminal 20 and the electrode assembly 10. In the related art, considering an increase in the energy density and charge/discharge speed, the current collector 111 is becoming thinner, and the electrode terminal 20 is becoming thicker. A reacting force generated during bending of the electrode terminal 20 is likely to cause breakage of the connection region between the electrode terminal 20 and the electrode assembly 10. After the connection region between the electrode terminal 20 and the electrode assembly 10 is broken or disconnected, continuing to charge and discharge the secondary battery causes a reliability issue such as lithium precipitation.

In this application, the first portion 21 and the second portion 22 are provided, and the edges of the first connection region 211 and the second connection region 221 are staggered, such that the tension regions between the electrode terminal 20 and the electrode assembly 10 are separated, reducing the risk of simultaneous disconnection of the first connection region 211 and the second connection region 221, and increasing the possibility of maintained connection between the electrode terminal 20 and the electrode assembly 10 when the secondary battery 100 faces situations such as impact and bending of the electrode terminal 20, thereby reducing the influence of the above situations on charging, discharging, lithium precipitation, and the like on the secondary battery 100, and improving the reliability of the secondary battery 100.

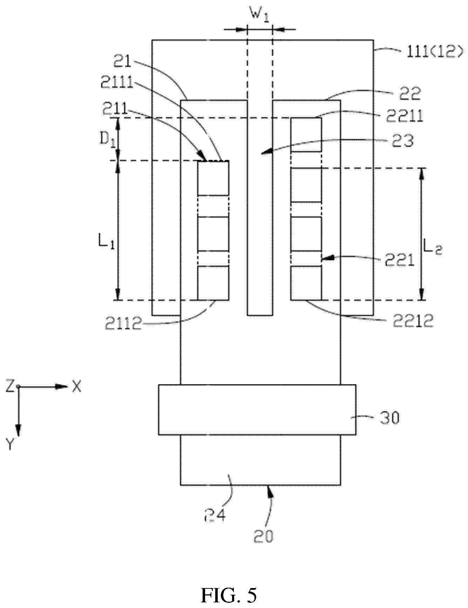

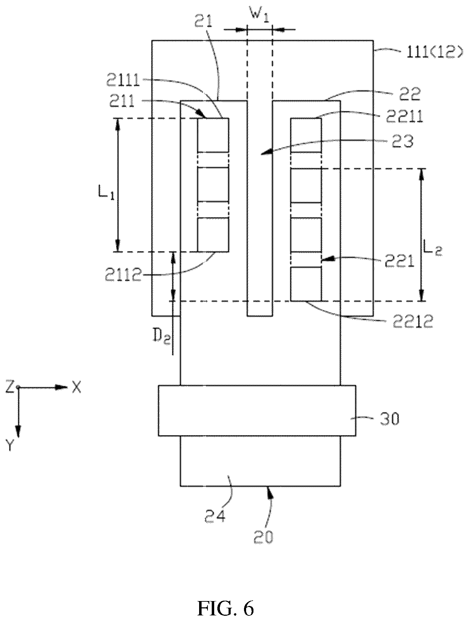

In some embodiments, referring to FIG. 5 and FIG. 6, D₁>0 and D₂=0; and in some other embodiments, D₁=0 and D₂>0.

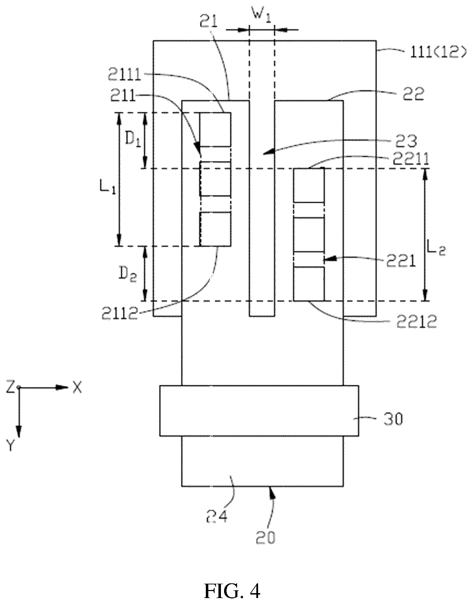

In some embodiments, referring to FIG. 4, D₁>0 and D₂>0, such that the first edge 2111 and the third edge 2211 are staggered, and the second edge 2112 and the fourth edge 2212 are staggered, achieving a more significant separation effect on the tension regions between the electrode terminal 20 and the electrode assembly 10, thereby helping to further improve the reliability of the secondary battery 100.

In some embodiments, the first edge 2111, the second edge 2112, the third edge 2211, and the fourth edge 2212 may be straight edges extending along the first direction X. Alternatively, the first edge 2111, the second edge 2112, the third edge 2211, and the fourth edge 2212 may be curved, zigzag, or wavy edges. This is not specifically limited herein.

In some embodiments, referring to FIG. 4, D₁>0, and in the extension direction of the electrode terminal 20, a length of the first connection region 211 is L₁, and a length of the second connection region 221 is L₂, and L₁>D₁ and L₂>D₁.

In some embodiments, referring to FIG. 4, D₂>0, and in the extension direction of the electrode terminal 20, a length of the first connection region 211 is L₁, and a length of the second connection region 221 is L₂, and L₁>D₂ and L₂>D₂.

When L₁>D₁>0 and L₂>D₁>0 or L₁>D₂>0 and L₂>D₂>0 are satisfied, a distance by which the first connection region 211 and the second connection region 221 are staggered in the extension direction of the electrode terminal 20 is not greater than the length of any one of the connection regions, such that the first connection region 211 and the second connection region 221 are not entirely staggered, helping to reduce a length occupied by both the two connection regions. When a region, which may be connected to the electrode terminal 20, on the electrode assembly 10 is fixed, the above conditions being satisfied helps to increase the lengths of the first connection region 211 and the second connection region 221 so as to improve the stability of the connection between the electrode terminal 20 and the electrode assembly 10, thereby improving the reliability of the secondary battery 100.

In some embodiments, 0.5 mm ≤L₁≤30 mm being satisfied helps to increase a connection area between the first portion 21 and the electrode assembly 10, thereby reducing the risk of short circuit of the secondary battery 100 caused by separation of the electrode terminal 20 and the electrode assembly 10.

In an illustrative example, L₁ may be any one of 0.5 mm, 1 mm, 2 mm, 4 mm, 6 mm, 8 mm, 10 mm, 12 mm, 14 mm, 16 mm, 18 mm, 20 mm, 22 mm, 24 mm, 26 mm, 28 mm, or 30 mm.

In some embodiments, 0.5 mm ≤L₂≤30 mm being satisfied helps to increase a connection area between the first portion 21 and the electrode assembly 10, thereby reducing the risk of short circuit of the secondary battery 100 caused by separation of the electrode terminal 20 and the electrode assembly 10.

In an illustrative example, L₂ may be any one of 0.5 mm, 1 mm, 2 mm, 4 mm, 6 mm, 8 mm, 10 mm, 12 mm, 14 mm, 16 mm, 18 mm, 20 mm, 22 mm, 24 mm, 26 mm, 28 mm, or 30 mm.

In some embodiments, the first portion 21 is welded to the electrode assembly 10, and the first connection region 211 is a welded region.

In some embodiments, the second portion 22 is welded to the electrode assembly 10, and the second connection region 221 is a welded region.

In some embodiments, referring to FIG. 4, a gap 23 is provided between the first portion 21 and the second portion 22 in the first direction X. The gap 23 separates the first portion 21 and the second portion 22, reducing the mutual influence between the first portion 21 and the second portion 22.

For example, the gap 23 provided between the first portion 21 and the second portion 22 helps to reduce the risk of the first portion 21 and the second portion 22 being welded together during welding of the first portion 21 and the electrode assembly 10, or helps to reduce the risk of the first portion 21 and the second portion 22 being welded together during welding of the second portion 22 and the electrode assembly 10.

For another example, the gap 23 provided between the first portion 21 and the second portion 22 helps to reduce the risk of the first portion 21 coming into contact with the second portion 22 and transmitting a force to the second portion 22 during stress deformation, or helps to reduce the risk of the second portion 22 coming into contact with the first portion 21 and transmitting a force to the first portion 21 during stress deformation.

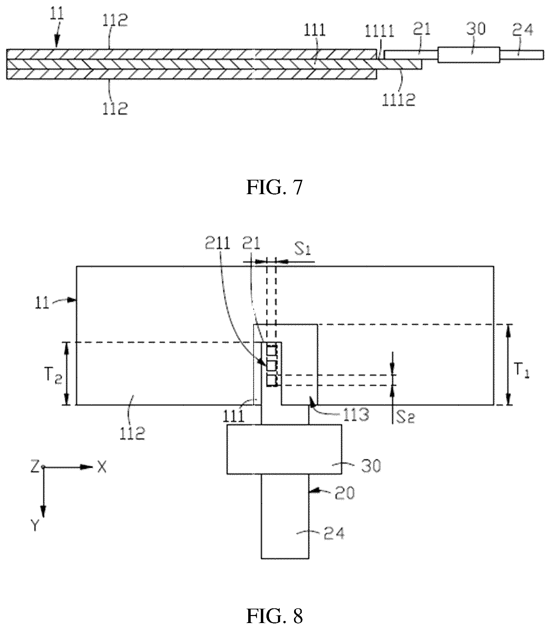

In some embodiments, referring to FIG. 2. FIG. 3, and FIG. 7, the electrode assembly 10 includes an electrode plate 11. The electrode plate 11 includes a current collector 111. The current collector 111 has a first surface 1111 and a second surface 1112 opposite to each other. The first portion 21 is connected to the first surface 1111 to form the first connection region 211, and the second portion 22 is connected to the first surface 1111 to form the second connection region 221.

The first portion 21 and the second portion 22 are both connected to the first surface 1111, such that the first portion 21 and the second portion 22 are connected to a same side surface of the current collector 111, reducing a procedure of turning over the secondary battery 100 during connection, reducing the difficulty in connection, and improving the connection efficiency.

In some embodiments, referring to FIG. 2, FIG. 8, and FIG. 9, the electrode assembly 10 includes an electrode plate 11. The electrode plate 11 includes a current collector 111. The current collector 111 has a first surface 1111 and a second surface 1112 opposite to each other. The first portion 21 is connected to the first surface 1111 to form the first connection region 211, and the second portion 22 is connected to the second surface 1112 to form the second connection region 221.

The first portion 21 is connected to the first surface 1111, and the second portion 22 is connected to the second surface 1112, such that the first portion 21 and the second portion 22 are connected to different sides of the electrode plate 11, helping to reduce the mutual influence between the first portion 21 and the second portion 22. For example, the first portion 21 and the second portion 22 being connected to different sides of the electrode plate 11 helps to reduce the risk of the first portion 21 and the second portion 22 being welded together, and also helps to reduce the risk of mutual force transmission between the first portion 21 and the second portion 22. In addition, the first portion 21 and the second portion 22 being connected to different sides of the electrode plate 11 also helps to disperse the tension regions between the electrode terminal 20 and the electrode assembly 10.

In an embodiment in which the electrode terminal 20 is connected to the electrode plate 11, referring to FIG. 2, FIG. 3, and FIG. 8, the electrode assembly 10 includes an electrode plate 11. The electrode plate 11 includes a current collector 111 and an active substance layer 112, where the active substance layer 112 is disposed on the current collector 111. The active substance layer 112 is provided with a first groove 113, and the first groove 113 exposes the current collector 111. At least a part of the first portion 21 and a part of the second portion 22 are located in the first groove 113, and the first portion 21 and the second portion 22 are connected to the current collector 111 exposed from the first groove 113. In the second direction Y, a width of the first groove 113 is T₁.

In some embodiments, the active substance layer 112 is further provided with a second groove (not shown in the figure). One of the electrode terminal 20 of the positive electrode or the electrode terminal 20 of the negative electrode is located in the first groove 113, and the electrode terminal 20 of the other electrode is located in the second groove.

In some embodiments, a part of the active substance layer 112 on the current collector 111 is washed off to expose a part of the current collector 111, so as to form the first groove 113 and the second groove. At least a part of the first portion 21 and at least a part of the second portion 22 are located in the first groove 113 and connected to the current collector 111.

In an embodiment in which the electrode terminal 20 is connected to the electrode plate 11, referring to FIG. 3 and FIG. 8, a length of an orthographic projection of the first portion 21 on the electrode plate 11 in the second direction Y is T₂, and a length of an orthographic projection of the second portion 22 on the electrode plate 11 in the second direction Y is T₃, and T₁-0.5 mm≥T₂≥T₁-5 mm and T₁-0.5 mm≥T₃≥T₁-5 mm. This helps to reduce the risk of the first portion 21 and the second portion 22 coming into contact with the active substance layer 112 when the secondary battery 100 is subject to an impact.

In an embodiment in which the electrode terminal 20 is connected to the electrode plate 11, referring to FIG. 4, a minimum width of the gap 23 in the first direction X is W₁, and 3 mm≥W₁≥0.5 mm.

It should be noted that the minimum width W₁ of the gap 23 is a minimum distance between an edge of the first portion 21 close to the second portion 22 and an edge of the second portion 22 close to the first portion 21 in the first direction X.

The minimum width W₁ of the gap 23 satisfying 3 mm≥W₁≥0.5 mm helps to further increase the widths of the first portion 21 and the second portion 22 in the first direction X within a limited space, can enhance the structural strength of the first portion 21 and the second portion 22, also helps to increase areas of the first connection region 211 and the second connection region 221, and reduces the risk of breakage of the first connection region 211 and the second connection region 221, thereby improving the reliability of the secondary battery 100.

In an illustrative example, W₁ may be any one of 3 mm, 2.8 mm, 2.5 mm, 2.2 mm, 2 mm, 1.8 mm, 1.5 mm, 1.3 mm, 1 mm, 0.8 mm, or 0.5 mm.

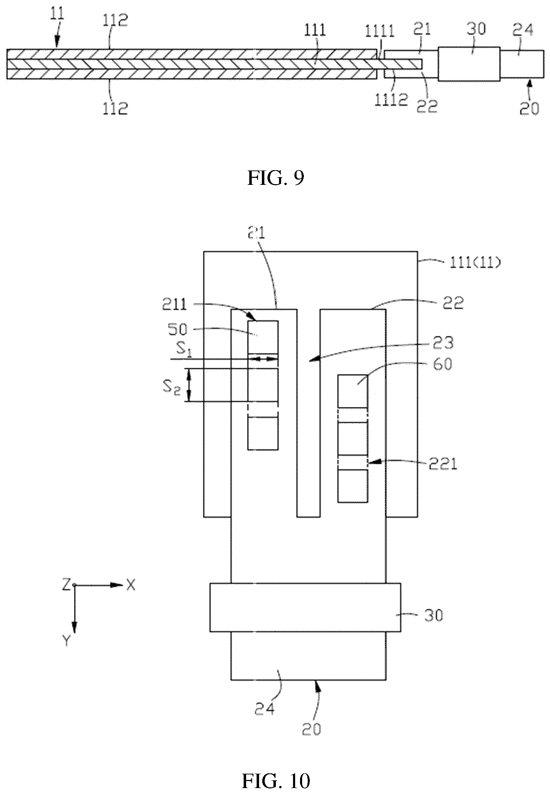

In an embodiment in which the electrode terminal 20 is connected to the electrode plate 11, referring to FIG. 10, the electrode plate 11 of the electrode assembly 10 is welded to the first portion 21, a plurality of first weld marks 50 are provided between the electrode plate 11 of the electrode assembly 10 and the first portion 21, and the plurality of first weld marks 50 are located in the first connection region 211. In the first direction X, a width of the first weld mark 50 is S₁, and 0.5 mm≤S₁≤8 mm.

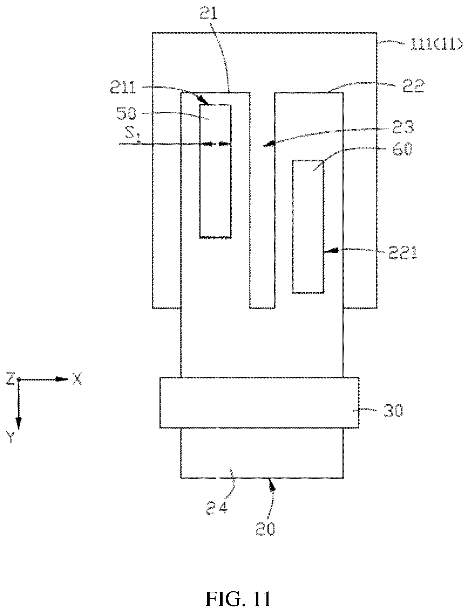

In some embodiments, referring to FIG. 11, the electrode plate 11 of the electrode assembly 10 and the first portion 21 are welded row by row, and the plurality of first weld marks 50 are sequentially connected to form a continuous weld mark.

In some embodiments, referring to FIG. 10, the electrode plate 11 of the electrode assembly 10 and the first portion 21 are not welded row by row, and the plurality of first weld marks 50 are spaced apart in the extension direction of the electrode terminal 20. In the extension direction of the electrode terminal 20, a length of the first weld mark 50 is S₂, and 0.5 mm≤S₂≤8 mm.

When the length and width of the first weld mark 50 satisfy the above conditions, the welded region is not too small, helping to enhance the welding strength and helping to improve the stability of the connection between the electrode terminal 20 and the electrode assembly 10; moreover, the welded region is not too large, helping to reduce the risk of a failure in effective welding and reduce the risk of structural strength reduction of the electrode terminal 20, thereby improving the welding effect.

In an embodiment in which the electrode terminal 20 is connected to the electrode plate 11, referring to FIG. 10, the electrode plate 11 of the electrode assembly 10 is welded to the second portion 22, a plurality of second weld marks 60 are provided between the electrode plate 11 of the electrode assembly 10 and the second portion 22, and the plurality of second weld marks 60 are located in the second connection region 221. For a width of the second weld mark 60 in the first direction X and a length of the second weld mark 60 in the extension direction of the electrode terminal 20, reference may be made to the first weld mark 50, which is not described herein again.

In an illustrative example, S₁ and S₂ each may be any one of 8 mm, 7.5 mm, 7 mm, 6.5 mm, 6 mm, 5.5 mm, 5 mm, 4.5 mm, 4 mm, 3.5 mm, 3 mm, 2.8 mm, 2.5 mm, 2.2 mm, 2 mm, 1.8 mm, 1.5 mm, 1.3 mm, 1 mm, 0.8 mm, or 0.5 mm. S₁ and S₂ may be equal or not equal.

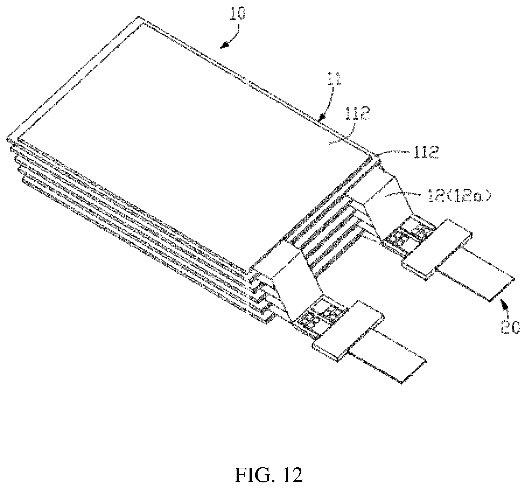

In some embodiments, referring to FIG. 12 to FIG. 14, the electrode assembly 10 is a stacked structure. The electrode assembly 10 includes a plurality of stacked electrode plates 11. The electrode plate 11 includes a current collector 111, a sub-tab 12a, and an active substance layer 112. The sub-tab 12a is connected to the current collector 111, and the active substance layer 112 is disposed on the current collector 111. A plurality of sub-tabs 12a are stacked and connected to form a tab 12. The tab 12 has a third surface 123 and a fourth surface 124 opposite to each other. The first portion 21 is connected to the third surface 123 to form the first connection region 211, and the second portion 22 is connected to the third surface 123 to form the second connection region 221.

The first portion 21 and the second portion 22 are both connected to the third surface 123, such that the first portion 21 and the second portion 22 are connected to a same side surface of the tab 12, reducing a procedure of turning over the secondary battery 100 during connection, reducing the difficulty in connection, and improving the connection efficiency.

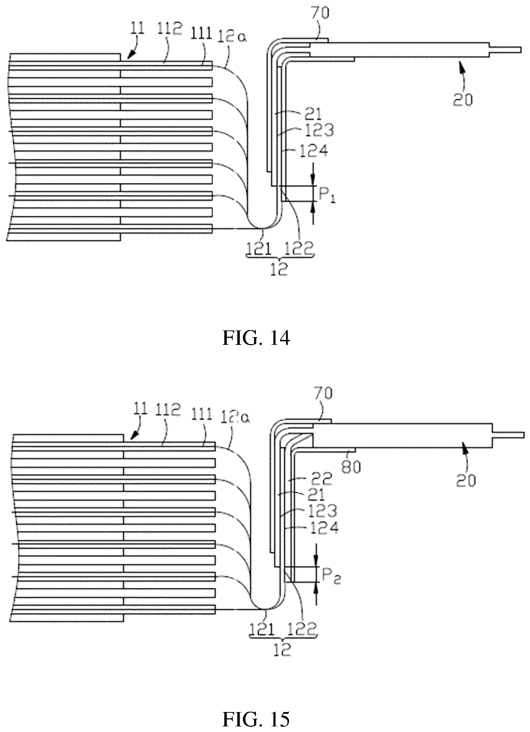

In some embodiments, referring to FIG. 15, the electrode assembly 10 includes a plurality of stacked electrode plates 11. The electrode plate 11 includes a current collector 111, a sub-tab 12a, and an active substance layer 112. The sub-tab 12a is connected to the current collector 111, and the active substance layer 112 is disposed on the current collector 111. A plurality of sub-tabs 12a are stacked and connected to form a tab 12. The tab 12 has a third surface 123 and a fourth surface 124 opposite to each other. The first portion 21 is connected to the third surface 123 to form the first connection region 211, and the second portion 22 is connected to the fourth surface 124 to form the second connection region 221.

The first portion 21 is connected to the third surface 123, and the second portion 22 is connected to the fourth surface 124, such that the first portion 21 and the second portion 22 are connected to different sides of the tab 12, helping to reduce the mutual influence between the first portion 21 and the second portion 22. For example, the first portion 21 and the second portion 22 being connected to different sides of the tab 12 helps to reduce the risk of the first portion 21 and the second portion 22 being welded together, and also helps to reduce the risk of mutual force transmission between the first portion 21 and the second portion 22. In addition, the first portion 21 and the second portion 22 being connected to different sides of the tab 12 also helps to disperse the tension regions between the electrode terminal 20 and the electrode assembly 10.

In an embodiment in which the electrode terminal 20 is connected to the tab 12, the sub-tab 12a is formed by cutting the current collector 111, and the sub-tab 12a and the current collector 111 are made of a same material.

In an embodiment in which the electrode terminal 20 is connected to the tab 12, referring to FIG. 4, a minimum width of the gap 23 in the first direction X is W₁, and 5 mm≥W₁>0.5 mm.

It should be noted that the minimum width W₁ of the gap 23 is a minimum distance between an edge of the first portion 21 close to the second portion 22 and an edge of the second portion 22 close to the first portion 21 in the first direction X.

The minimum width W₁ of the gap 23 satisfying 5 mm≥W₁≥0.5 mm helps to reduce the mutual influence between the first portion 21 and the second portion 22, also helps to increase the widths of the first portion 21 and the second portion 22 in the first direction X within a limited space, can enhance the structural strength of the first portion 21 and the second portion 22, also helps to increase the areas of the first connection region 211 and the second connection region 221, and reduces the risk of breakage of the first connection region 211 and the second connection region 221, thereby improving the reliability of the secondary battery 100.

In an illustrative example, W₁ may be any one of 5 mm, 4.8 mm, 4.5 mm, 4.2 mm, 4 mm, 3.8 mm, 3.5 mm, 3.2 mm, 3 mm, 2.8 mm, 2.5 mm, 2.2 mm, 2 mm, 1.8 mm, 1.5 mm, 1.3 mm, 1 mm, 0.8 mm, or 0.5 mm.

In an embodiment in which the electrode terminal 20 is connected to the tab 12, referring to FIG. 14 and FIG. 15, a plurality of sub-tabs 12a are stacked and then bent along a third direction Z (a thickness direction of the secondary battery 100), to make the tab 12 have a bent portion 121 and a connection portion 122. In an extension direction of the tab 12, the connection portion 122 is located on one side of the bent portion 121 away from the electrode assembly 10. The connection portion 122 extends along the third direction Z, and the first portion 21 and the second portion are both connected to the connection portion 122.

In some embodiments, referring to FIG. 14 and FIG. 15, a minimum distance between the first portion 21 and a boundary line of the bent portion 121 and the connection portion 122 is P₁, and a minimum distance between the second portion 22 and a boundary line of the bent portion 121 and the connection portion 122 is P₂, and 0.5 mm>P₁>5 mm and 0.5 mm>P₂>5 mm. This helps to reduce the possibility of contact between end portions of the first portion 21 and second portion 22 and the bent portion 121 during bending of the plurality of sub-tabs 12a, thereby reducing a reacting force applied to the first portion 21 and the second portion 22, reducing the risk of breakage of the first connection region 211 and the second connection region 221, and improving the reliability of the secondary battery 100.

In an illustrative example, P₁ and P₂ each may be any one of 5 mm, 4.8 mm, 4.5 mm, 4.2 mm, 4 mm, 3.8 mm, 3.5 mm, 3.2 mm, 3 mm, 2.8 mm, 2.5 mm, 2.2 mm, 2 mm, 1.8 mm, 1.5 mm, 1.3 mm, 1 mm, 0.8 mm, or 0.5 mm. P₁ and P₂ may be equal or not equal.

In an embodiment in which the electrode terminal 20 is connected to the tab 12, the tab 12 of the electrode assembly 10 is welded to the first portion 21, a plurality of first weld marks 50 are provided between the tab 12 of the electrode assembly 10 and the first portion 21, and the plurality of first weld marks 50 are located in the first connection region 211. In the first direction X, a width of the first weld mark 50 is S₁, and 0.5 mm≤S₁≤3 mm. In the extension direction of the electrode terminal 20, a length of the first weld mark 50 is S₂, and 0.5 mm≤S₂≤3 mm.

When the length and width of the first weld mark 50 satisfy the above conditions, the welded region is not too small, helping to enhance the welding strength and helping to improve the stability of the connection between the electrode terminal 20 and the electrode assembly 10; moreover, the welded region is not too large, helping to reduce the risk of a failure in effective welding and reduce the risk of structural strength reduction of the electrode terminal 20, thereby improving the welding effect.

In an embodiment in which the electrode terminal 20 is connected to the tab 12, the tab 12 of the electrode assembly 10 is welded to the second portion 22, a plurality of second weld marks 60 are provided between the tab 12 of the electrode assembly 10 and the second portion 22, and the plurality of second weld marks 60 are located in the second connection region 221. For a width of the second weld mark 60 in the first direction X and a length of the second weld mark 60 in the extension direction of the electrode terminal 20, reference may be made to the first weld mark 50, which is not described herein again.

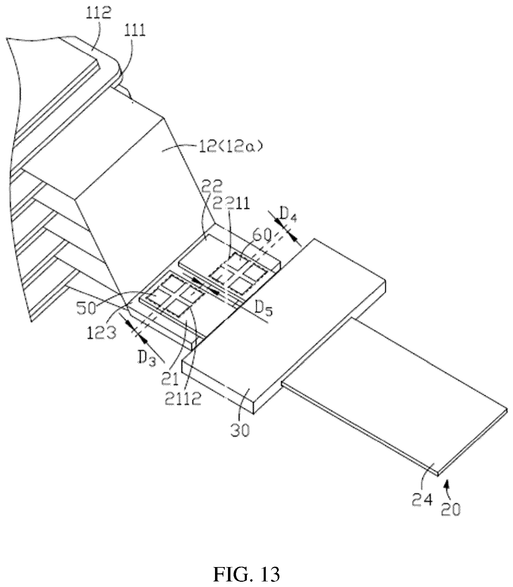

In some embodiments, referring to FIG. 13, the plurality of first weld marks 50 are arranged along the extension direction of the electrode terminal 20, and the plurality of second weld marks 60 are arranged along the extension direction of the electrode terminal 20. In the extension direction of the electrode terminal 20, a distance between any two adjacent first weld marks 50 is D₃, and a distance between any two adjacent second weld marks 60 is D₄, and 0.5 mm<D₃<3 mm and 0.5 mm<D₄<3 mm.

When the distance D₃ between any two adjacent first weld marks 50 and the distance D₄ between any two adjacent second weld marks 60 satisfy the above conditions, the plurality of first weld marks 50 are unlikely to be too far apart and the plurality of second weld marks 60 are unlikely to be too far apart such that the first weld marks 50 and the second weld marks 60 are unlikely to crack, thereby improving the stability of the connection between the electrode terminal 20 and the electrode assembly 10; in addition, the first weld marks 50 are unlikely to be too close to each other such that the difficulty in effective welding is avoided, thereby improving the welding effect.

In an illustrative example, D₃ and D₄ may be any one of 3 mm, 2.8 mm, 2.5 mm, 2.2 mm, 2 mm, 1.8 mm, 1.5 mm, 1.3 mm, 1 mm, 0.8 mm, or 0.5 mm. W₃ and W₄ may be equal or not equal.

In some embodiments, referring to FIG. 13, in the extension direction of the electrode terminal 20, a distance between the second edge 2112 and the sealing member 30 is less than or equal to a distance between the third edge 2211 and the sealing member 30. In the extension direction of the electrode terminal 20, a minimum distance between a geometric center of a first weld mark 50 closest to the second edge 2112 among the plurality of first weld marks 50 and a geometric center of a second weld mark 60 closest to the third edge 2211 among the plurality of second weld marks 60 is D₅, and 0.5 mm<D₅<3 mm.

D₅ satisfying the condition 0.5 mm<D₅<3 mm helps to reduce the risk of the structural strength of the electrode terminal 20 being affected by an excessively large welded region and also helps to reduce the risk of unstable connection caused by an excessively small welded region.

In an illustrative example, D₅ may be any one of 3 mm, 2.8 mm, 2.5 mm, 2.2 mm, 2 mm, 1.8 mm, 1.5 mm, 1.3 mm, 1 mm, 0.8 mm, or 0.5 mm.

To verify the impact of various dimensions of the electrode terminal 20 on the performance of the secondary battery 100, the following test was performed.

A method for testing a failure rate of a drop test of the secondary battery 100 was as follows.

The secondary battery 100 was pretreated at 25°C and left for standing in a normal-temperature environment for 60 min, and then a voltage of the secondary battery 100 was tested before the drop test; the secondary battery 100 was put into a fixture; and a drop device was used to freely drop the secondary battery 100 from a position that is 2 m high from the ground according to the following sequence: head-tail-head right corner-tail right corner-head left corner-tail left corner (angle: 45±15°), and such operation was repeated for 10 rounds. After the drop test, a voltage of the secondary battery 100 was measured and recorded, where appearances of the secondary battery 100 before and after the test were both inspected and photographed. Criteria for pass of the drop test were: no smoke, no electrolyte solution leakage, and a voltage drop < 30 mV.

The following describes specific implementations of the examples and comparative examples. 20 secondary batteries 100 were used for test in each group of examples and comparative examples uses.

### Example 1

(1) Preparation of negative electrode plate: Graphite was used as a negative electrode active material; the negative electrode active material graphite, a binder styrene butadiene rubber (SBR), and a thickener sodium carboxymethyl cellulose (CMC) were mixed at a weight ratio of 96:2:2; deionized water was added as a solvent to prepare a slurry with a solid content of 70wt%; and the slurry was well stirred. The slurry was uniformly applied onto one surface of a 10 µm thick copper foil and dried to obtain a negative electrode plate with one surface coated with a negative electrode active layer. The foregoing steps were repeated on the other surface of the copper foil to obtain a negative electrode plate with both surfaces coated with the negative electrode active layer.
(2) Preparation of positive electrode plate: a positive electrode active material lithium cobalt oxide (LiCoO₂), conductive carbon black (Super P), and polyvinylidene fluoride (PVDF) were mixed at a weight ratio of 97.5:1.0:1.5; then N-methylpyrrolidone (NMP) was added as a solvent to obtain a slurry with a solid content of 75wt%; and the slurry was well stirred. The slurry was uniformly applied onto one surface of a 12 µm thick aluminum foil and dried to obtain a positive electrode plate with one surface coated with a positive electrode active layer. The foregoing steps were repeated on the other surface of the aluminum foil to obtain a positive electrode plate with both surfaces coated with the positive electrode active layer.
(3) Preparation of electrolyte: In a dry argon atmosphere, first, ethylene carbonate (EC), ethyl methyl carbonate (EMC), and diethyl carbonate (DEC) were mixed at a mass ratio of EC: EMC: DEC=30:50:20 to form a base organic solvent; then a lithium salt lithium hexafluorophosphate (LiPF₆) was added and dissolved in the base organic solvent; and the resulting mixture was well mixed to obtain an electrolyte solution in which a mass concentration of LiPF₆ was 12.5%.
(4) Preparation of separator: A polyethylene porous film was used as a substrate layer; one side surface of the substrate layer was coated with a ceramic layer containing aluminum oxide ceramics and a PVDF binder, where a mass percentage of the aluminum oxide ceramics in the ceramic layer was 95%.
(5) Preparation of electrode assembly 10: A copper foil of the negative electrode plate (negative electrode current collector) was cut into a protruding narrow copper foil (negative electrode sub-tab), and an aluminum foil of the positive electrode plate (positive electrode current collector) was cut into a protruding narrow aluminum foil (positive electrode sub-tab). A plurality of layers of positive electrode plates, separators, and negative electrode plates were stacked to form an electrode assembly 10 for later use. A plurality of narrow copper foil layers were stacked to form a copper sheet (negative electrode tab), and a plurality of narrow aluminum foil layers were stacked to form an aluminum sheet (positive electrode tab).
(6) Connection of electrode terminal 20: One copper sheet was provided with a sealing adhesive (sealing member 30) to form a negative electrode terminal; one aluminum sheet was provided with a sealing adhesive (sealing member 30) to form a positive electrode terminal; and the negative electrode terminal and the positive electrode terminal were both cut in a length direction to form two portions arranged in a width direction. A first portion 21 and a second portion 22 of the negative electrode terminal were both welded to an upper surface of the negative electrode tab, and a first portion 21 and a second portion 22 of the positive electrode terminal were both welded to an upper surface of the positive electrode tab.

The electrode terminals and the tabs were each welded to form a first connection region 211 and a second connection region 221, where the first connection region 211 had a first edge 2111 away from the sealing member 30 and a second edge 2112 close to the sealing member 30, and the second connection region 221 had a third edge 2211 away from the sealing member 30 and a fourth edge 2212 close to the sealing member 30. In an extension direction of the electrode terminal 20, a minimum distance D₁ between the first edge 2111 and the third edge 2211 was 2 mm, and a minimum distance D₂ between the second edge 2112 and the fourth edge 2212 was 0 mm.

In an arrangement direction of the first portion 21 and the second portion 22, a gap 23 was provided between the first portion 21 and the second portion 22, and a minimum width W₁ of the gap 23 was 1 mm.

In the extension direction of the electrode terminal 20, a length L₁ of the first connection region 211 was 3 mm, and a length L₂ of the second connection region 221 was 2.5 mm.

A plurality of first weld marks 50 were provided between an electrode plate 11 of the electrode assembly 10 and the first portion 21, and a width S₁ of the first weld mark 50 was 1 mm in an arrangement direction of the first portion 21 and the second portion 22. In the extension direction of the electrode terminal 20, a length S₂ of the first weld mark 50 was 1 mm.

(7) Assembly of electrode assembly 10: An aluminum-plastic film with a depression formed through punching was placed into an assembly fixture, with surface facing upward; and the electrode assembly 10 was placed into the depression and pressed by an external forced applied. Then, another aluminum-plastic film with a depression formed through punching was used to cover the electrode assembly 10, with surface facing downward; and peripheries of the two aluminum-plastic films were thermally sealed through hot pressing to obtain an assembled electrode assembly.

(8) electrolyte solution injection and packaging: An electrolyte solution was injected into the assembled electrode assembly 10, followed by processes such as vacuum packaging, standing, hot-pressing formation, and shaping, to obtain a lithium-ion battery.

It should be noted that the above serial numbers (1) to (8) do not limit the sequence of the steps.

### Comparative example 1

Comparative example 1 differed from Example 1 in that the electrode terminal 20 of the secondary battery 100 in Comparative example 1 was not cut, the positive electrode terminal and the negative electrode terminal were each a continuous entirety, and a connection region of the electrode terminal 20 and the tab 12 was also a continuous entirety.

### Example 2

Example 2 differed from Example 1 in that the minimum distance D₁ between the first edge 2111 and the third edge 2211 was 0 mm, and the minimum distance D₂ between the second edge 2112 and the fourth edge 2212 was 1.5 mm.

### Example 3

Example 3 differed from Example 1 in that the minimum distance D₂ between the second edge 2112 and the fourth edge 2212 was 1.5 mm.

### Example 4

Example 4 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 0 mm.

### Example 5

Example 5 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 0.5 mm.

### Example 6

Example 6 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 2 mm.

### Example 7

Example 7 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 3 mm.

### Example 8

Example 8 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 4 mm.

### Example 9

Example 9 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 5 mm.

### Example 10

Example 10 differed from Example 1 in that the minimum distance D₂ between the second edge 2112 and the fourth edge 2212 was 1.5 mm, and in the arrangement direction of the first portion 21 and the second portion 22, the minimum width W₁ of the gap 23 was 5.5 mm.

### Example 11

Example 11 differed from Example 1 in that the minimum distance D₂ between the second edge 2112 and the fourth edge 2212 was 1.5 mm, the width S₁ of the first weld mark 50 was 0.3 mm, and in the extension direction of the electrode terminal 20, the length S₂ of the first weld mark 50 was 0.3 mm.

### Example 12

Example 12 differed from Example 1 in that the minimum distance D₂ between the second edge 2112 and the fourth edge 2212 was 1.5 mm, the width S₁ of the first weld mark 50 was 0.5 mm, and in the extension direction of the electrode terminal 20, the length S₂ of the first weld mark 50 was 0.5 mm.

### Example 13

Example 13 differed from Example 1 in that the minimum distance D₂ between the second edge 2112 and the fourth edge 2212 was 1.5 mm, the width S₁ of the first weld mark 50 was 2 mm, and in the extension direction of the electrode terminal 20, the length S₂ of the first weld mark 50 was 2 mm.

### Example 14

Example 14 differed from Example 1 in that the minimum distance D₂ between the second edge 2112 and the fourth edge 2212 was 1.5 mm, the width S₁ of the first weld mark 50 was 4 mm, and in the extension direction of the electrode terminal 20, the length S₂ of the first weld mark 50 was 4 mm.

### Example 15

Example 15 differed from Example 1 in that the minimum distance D₂ between the second edge 2112 and the fourth edge 2212 was 1.5 mm, the width S₁ of the first weld mark 50 was 6 mm, and in the extension direction of the electrode terminal 20, the length S₂ of the first weld mark 50 was 6 mm.

### Example 16

Example 16 differed from Example 1 in that the minimum distance D₂ between the second edge 2112 and the fourth edge 2212 was 1.5 mm, the width S₁ of the first weld mark 50 was 8 mm, and in the extension direction of the electrode terminal 20, the length S₂ of the first weld mark 50 was 8 mm.

### Example 17

Example 17 differed from Example 1 in that the minimum distance D₂ between the second edge 2112 and the fourth edge 2212 was 1.5 mm, the width S₁ of the first weld mark 50 was 9 mm, and in the extension direction of the electrode terminal 20, the length S₂ of the first weld mark 50 was 9 mm.

### Example 18

Example 18 differed from Example 1 in that the minimum distance D₂ between the second edge 2112 and the fourth edge 2212 was 1.5 mm, and in the extension direction of the electrode terminal 20, the length L₁ of the first connection region 211 was 2 mm, and the length L₂ of the second connection region 221 was 1.5 mm.

### Example 19

Example 19 differed from Example 1 in that the minimum distance D₂ between the second edge 2112 and the fourth edge 2212 was 1.5 mm, and in the arrangement direction of the first portion 21 and the second portion 22 and in the extension direction of the electrode terminal 20, the length L₁ of the first connection region 211 was 1 mm, and the length L₂ of the second connection region 221 was 0.5 mm.

The following Table 1 shows the data and test results of the above test.

**Table 1: Drop test results of secondary battery**

| Group | D₁ (mm) | D₂ (mm) | W₁ (mm) | L₁ (mm) | L₂ (mm) | S₁ (mm) | S₂ (mm) | Failure rate in drop test |
|---|---|---|---|---|---|---|---|---|
| Comparative example 1 | - | - | - | 3 | 2.5 | 1 | 1 | 14/20 |
| Example 1 | 2 | 0 | 1 | 3 | 2.5 | 1 | 1 | 7/20 |
| Example 2 | 0 | 1.5 | 1 | 3 | 2.5 | 1 | 1 | 8/20 |
| Example 3 | 2 | 1.5 | 1 | 3 | 2.5 | 1 | 1 | 0/20 |
| Example 4 | 2 | 1.5 | 0 | 3 | 2.5 | 1 | 1 | 9/20 |
| Example 5 | 2 | 1.5 | 0.5 | 3 | 2.5 | 1 | 1 | 3/20 |
| Example 6 | 2 | 1.5 | 2 | 3 | 2.5 | 1 | 1 | 1/20 |
| Example 7 | 2 | 1.5 | 3 | 3 | 2.5 | 1 | 1 | 2/20 |
| Example 8 | 2 | 1.5 | 4 | 3 | 2.5 | 1 | 1 | 3/20 |
| Example 9 | 2 | 1.5 | 5 | 3 | 2.5 | 1 | 1 | 4/20 |
| Example 10 | 2 | 1.5 | 5.5 | 3 | 2.5 | 1 | 1 | 7/20 |
| Example 11 | 2 | 1.5 | 1 | 3 | 2.5 | 0.3 | 0.3 | 6/20 |
| Example 12 | 2 | 1.5 | 1 | 3 | 2.5 | 0.5 | 0.5 | 3/20 |
| Example 13 | 2 | 1.5 | 1 | 3 | 2.5 | 2 | 2 | 2/20 |
| Example 14 | 2 | 1.5 | 1 | 3 | 2.5 | 4 | 4 | 1/20 |
| Example 15 | 2 | 1.5 | 1 | 3 | 2.5 | 6 | 6 | 3/20 |
| Example 16 | 2 | 1.5 | 1 | 3 | 2.5 | 8 | 8 | 4/20 |
| Example 17 | 2 | 1.5 | 1 | 3 | 2.5 | 9 | 9 | 9/20 |
| Example 18 | 2 | 1.5 | 1 | 2 | 1.5 | 1 | 1 | 4/20 |
| Example 19 | 2 | 1.5 | 1 | 1 | 0.5 | 1 | 1 | 5/20 |

It can be seen from the above Table 1 that as compared with Comparative example 1, at least one of D₁ or D₂ in Examples 1 to 3 is greater than 0; when at least one of D₁ or D₂ is greater than 0, the first edge 2111 and the third edge 2211 are staggered, and/or the second edge 2112 and the fourth edge 2212 are staggered, such that the tension regions between the electrode terminal 20 and the electrode assembly 10 are separately more significantly, and a failure rate of the drop test of the secondary battery 100 is lower. Thus, a percent of pass of the drop test is higher, helping to improve the reliability of the secondary battery 100.

It can be seen from Table 1 that as compared with Example 4 and Example 10, in Example 3 and Examples 5 to 9, 5 mm≥W₁>0.5 mm is satisfied; and 5 mm≥W₁>0.5 mm being satisfied helps to reduce the risk of breakage of the first connection region and the second connection region, also helps to isolate spreading of cracks, and reduces the failure rate of the drop test of the secondary battery 100. Thus, the percent of pass of the drop test is higher, helping to improve the reliability of the secondary battery 100.

It can be seen from Table 1 that as compared with Example 11 and Example 17, in Example 3 and Examples 12 to 16, 0.5 mm≤S₁≤8 mm and 0.5 mm≤S₂≤8 mm are satisfied; and 0.5 mm≤S₁≤8 mm and 0.5 mm≤S₂≤8 mm being satisfied helps to enhance the welding strength, reduces the risk of a failure in effective welding, reduces the risk of structural strength reduction of the electrode terminal 20, improves the welding effect, and reduces the failure rate of the drop test of the secondary battery 100. Thus, the percent of pass of the drop test is higher, helping to improve the reliability of the secondary battery 100.

It can be seen from Table 1 that as compared with Examples 1, 2, 18, and 19, in Example 3, L₁>D₁>0 and L₂>D₂>0 are satisfied; and L₁>D₁>0 and L₂>D₂>0 being satisfied helps to reduce the lengths of the first connection region 211 and the second connection region 221, thereby improving the stability of connection between the electrode terminal 20 and the electrode assembly 10 and reducing the failure rate of the drop test of the secondary battery 100. Thus, the percent of pass of the drop test is higher, helping to improve the reliability of the secondary battery 100.

In some embodiments, referring to FIG. 14, the secondary battery 100 further includes a first insulator 70 and a second insulator 80. The first insulator 70 is adhered to the first portion 21 and/or the second portion 22, and is located on one side of the connection portion 122. The second insulator 80 is adhered to the tab 12 and the electrode terminal 20, and is located on the other side of the connection portion 122. The first insulator 70 and the second insulator 80 reduce the risk of contact between the electrode terminal 20 and a component with another polarity.

In some embodiments, referring to FIG. 1 and FIG. 13, the electrode terminal 20 further includes a third portion 24. The third portion 24 connects the first portion 21 and the second portion 22. The third portion 24 is connected to the sealing member 30. The third portion 24 is configured to be connected to an external device. The third portion 24 provided helps to enhance the integrity of the electrode terminal 20 and facilitates the connection between the electrode terminal 20 and the external device.

In an embodiment in which the housing 40 includes a sealing portion 42, a larger number of the components extending out of the housing 40 through the sealing portion 42 results in a larger difficulty in sealing as well as a larger possibility that a gap running through the sealing portion 42 appears around each component extending out of the sealing portion 42. Compared to a solution in which the first portion 21 and the second portion 22 both extend out of the housing 40 through the sealing portion 42, a solution in which the third portion 24 extends out of the housing 40 through the sealing portion 42 helps to improve the sealing performance of the sealing portion 42.

In the embodiment in which the electrode terminal 20 includes the third portion 24, if the distance between the first portion 21 and the second portion 22 is too small, cracks are likely to be formed between the first portion 21 and the second portion 22, and the cracks are likely to spread, leading to breakage the first connection region 211 and the second connection region 221. The minimum width W₁ of the gap 23 between the first portion 21 and the second portion 22 satisfying W₁≥0.5 mm helps to increase the distance between the first portion 21 and the second portion 22, thereby reducing the risk of breakage of the first connection region 211 and the second connection region 221.

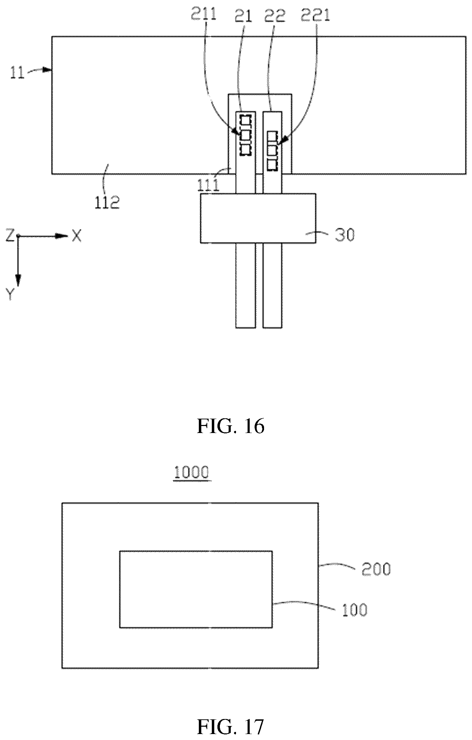

In some embodiments, referring to FIG. 16, the first portion 21 and the second portion 22 are separated, and the sealing member 30 connects the first portion 21 and the second portion 22. The first portion 21 and the second portion 22 being completely separated helps to further reduce the mutual influence between the first portion 21 and the second portion 22, helps to reduce the risk of mutual force transmission between the first portion 21 and the second portion 22, and helps to further improve the reliability of the secondary battery 100.

According to a second aspect, this application further provides an electronic apparatus 1000 including the secondary battery 100 according to any one of the foregoing embodiments.

In some embodiments, referring to FIG. 17, the electronic apparatus 1000 further includes an apparatus body 200. The secondary battery 100 is installed at the apparatus body 200 and is configured to supply power to the apparatus body 200.

In some embodiments, the electronic apparatus 1000 may be a mobile phone, a laptop, a tablet computer, a game console, a video recorder, or the like, which are not listed one by one herein.

By adopting the technical solution in any one of the foregoing embodiments of the secondary battery 100, the electronic apparatus 1000 at least has the beneficial effects brought by the technical solution of any one of the foregoing embodiments of the secondary battery 100, which are not described one by one herein again.

In addition, persons of ordinary skill in the art should appreciate that the foregoing embodiments are merely for description of this application rather than for limiting this application. Appropriate modifications and variations made to some embodiments without departing from the essential scope of this application all fall within the scope of this application, as defined by the appended claims.

## Claims

1. A secondary battery (100); **characterized in that** the secondary battery (100) comprises:
an electrode assembly (10);
an electrode terminal (20), comprising a first portion (21) and a second portion (22), wherein the first portion (21) and the second portion (22) are arranged in a first direction (X), the first portion (21) is connected to the electrode assembly (10) and comprises a first connection region (211), and the second portion (22) is connected to the electrode assembly (10) and comprises a second connection region (221); and
a sealing member (30) connected to the electrode terminal (20), wherein the sealing member (30) is disposed on one side of the electrode assembly (10) in a second direction (Y), and the first direction (X) is perpendicular to the second direction (Y); wherein
in an extension direction of the electrode terminal (20), the electrode terminal (20) extends away from the electrode assembly (10), and the first connection region (211) comprises a first edge (2111) away from the sealing member (30) and a second edge (2112) close to the sealing member (30); the second connection region (221) comprises a third edge (2211) away from the sealing member (30) and a fourth edge (2212) close to the sealing member (30); and in the extension direction of the electrode terminal (20), a minimum distance between the first edge (2111) and the third edge (2211) is D₁, a minimum distance between the second edge (2112) and the fourth edge (2212) is D₂, and at least one of D₁ or D₂ is greater than 0.

2. The secondary battery (100) according to claim 1, **characterized in that** D₁>0 and D₂>0.

3. The secondary battery (100) according to claim 2, **characterized in that** in the extension direction of the electrode terminal (20), a length of the first connection region (211) is L₁, a length of the second connection region (221) is L₂, and L₁>D₁ and L₂>D₁.

4. The secondary battery (100) according to claim 3, **characterized in that** 0.5 mm ≤L₁≤30 mm, and 0.5 mm≤L₂≤30 mm.

5. The secondary battery (100) according to any one of claims 1 to 4, **characterized in that** in the first direction (X), a gap (23) is provided between the first portion (21) and the second portion (22).

6. The secondary battery (100) according to claim 5, **characterized in that** in the first direction (X), a minimum width of the gap (23) is W₁, and 5 mm≥W1≥0.5 mm.

7. The secondary battery (100) according to claim 6, **characterized in that** the electrode assembly (10) comprises an electrode plate (11), the electrode plate (11) comprises a current collector (111) and an active substance layer (112), and the active substance layer (112) is disposed on the current collector (111); and
the active substance layer (112) is provided with a first groove (113); the first groove (113) exposes the current collector (111); at least a part of the first portion (21) and at least a part of the second portion (22) are located in the first groove (113) and connected to the current collector (111) of the first groove (113); in the second direction (Y), a width of the first groove (113) is T₁, a length of an orthographic projection of the first portion (21) on the electrode plate (11) is T₂, and a length of an orthographic projection of the second portion (22) on the electrode plate (11) is T₃; wherein T₁-0.5 mm≥T₂≥T₁-5 mm and T₁-0.5 mm≥T₃≥T₁-5 mm.

8. The secondary battery (100) according to any one of claims 1 to 7, **characterized in that** the electrode assembly (10) is welded to the first portion (21) and the second portion (22), a plurality of first weld marks (50) are provided between the first portion (21) and the electrode assembly (10), and the plurality of first weld marks (50) are located in the first connection region (211); and
in the first direction (X), a width of each first weld mark (50) is S₁, and 0.5 mm≤S₁≤8 mm.

9. The secondary battery (100) according to claim 8, **characterized in that** a plurality of second weld marks (60) are provided between the electrode assembly (10) and the second portion (22), and the plurality of second weld marks (60) are located in the second connection region (221);
the plurality of first weld marks (50) are arranged along the extension direction of the electrode terminal (20), and the plurality of second weld marks (60) are arranged along the extension direction of the electrode terminal (20); and
in the extension direction of the electrode terminal (20), a distance between any adjacent two of the plurality of first weld marks (50) is D₃, and a distance between any adjacent two of the plurality of second weld marks (60) is D₄, satisfying 0.5 mm≤D3≤3 mm and 0.5 mm≤D₄≤3 mm.

10. The secondary battery (100) according to claim 9, **characterized in that** in the extension direction of the electrode terminal (20), a distance between the second edge (2112) and the sealing member (30) is less than or equal to a distance between the third edge (2211) and the sealing member (30); and
in the extension direction of the electrode terminal (20), a minimum distance between a geometric center of one of the plurality of first weld marks (50) closest to the second edge (2112) and a geometric center of one of the plurality of second weld marks (60) closest to the third edge (2211) is D₅, and 0.5 mm≤D₅≤3 mm.

11. The secondary battery (100) according to any one of claims 1 to 10, **characterized in that** the electrode assembly (10) comprises an electrode plate (11), the electrode plate (11) comprises a current collector (111), the current collector (111) comprises a first surface (1111) and a second surface (1112) opposite to each other, the first portion (21) is connected to the first surface (1111) to form the first connection region (211), and the second portion (22) is connected to the first surface (1111) to form the second connection region (221); or
wherein the electrode assembly (10) comprises an electrode plate (11), the electrode plate (11) comprises a current collector (111), the current collector (111) comprises a first surface (1111) and a second surface (1112) opposite to each other, the first portion (21) is connected to the first surface (1111) to form the first connection region (211), and the second portion (22) is connected to the second surface (1112) to form the second connection region (221).

12. The secondary battery (100) according to any one of claims 1 to 10, **characterized in that** the electrode assembly (10) comprises a plurality of electrode plates (11) stacked together; each of the plurality of electrode plates (11) comprises a current collector (111), a sub-tab (12a), and an active substance layer (112); the sub-tab (12a) is connected to the current collector (111); and the active substance layer (112) is disposed on the current collector (111); wherein
the sub-tabs (12a) of the plurality of electrode plates (11) are stacked and connected to form a tab (12); the tab (12) comprises a third surface (123) and a fourth surface (124) opposite to each other; the first portion (21) is connected to the third surface (123) to form the first connection region (211); and the second portion (22) is connected to the third surface (123) to form the second connection region (221); or
wherein the electrode assembly (10) comprises a plurality of electrode plates (11) stacked together; each of the plurality of electrode plates (11) comprises a current collector (111), a sub-tab (12a), and an active substance layer (112); the sub-tab (12a) is connected to the current collector (111); and the active substance layer (112) is disposed on the current collector (111); wherein
the sub-tabs (12a) of the plurality of electrode plates (11) are stacked and connected to form a tab (12); the tab (12) comprises a third surface (123) and a fourth surface (124) opposite to each other; the first portion (21) is connected to the third surface (123) to form the first connection region (211); and the second portion (22) is connected to the fourth surface (124) to form the second connection region (221).

13. The secondary battery (100) according to any one of claims 1 to 12, **characterized in that** the electrode terminal (20) further comprises a third portion (24), the third portion (24) connects the first portion (21) and the second portion (22), the third portion (24) is connected to the sealing member (30), and the third portion (24) is configured to be connected to an external device.

14. The secondary battery (100) according to any one of claims 1 to 13, **characterized in that** the first portion (21) and the second portion (22) are separated, and the sealing member (30) connects the first portion (21) and the second portion (22).

15. An electronic apparatus, comprising the secondary battery (100) according to any one of claims 1 to 14.

## Patentansprüche

1. Sekundärbatterie (100); **dadurch gekennzeichnet, dass** die Sekundärbatterie (100) Folgendes umfasst:
eine Elektrodenbaugruppe (10);
einen Elektrodenanschluss (20), der einen ersten Abschnitt (21) und einen zweiten Abschnitt (22) umfasst, wobei der erste Abschnitt (21) und der zweite Abschnitt (22) in einer ersten Richtung (X) angeordnet sind, der erste Abschnitt (21) mit der Elektrodenbaugruppe (10) verbunden ist und einen ersten Verbindungsbereich (211) umfasst, und der zweite Abschnitt (22) mit der Elektrodenbaugruppe (10) verbunden ist und einen zweiten Verbindungsbereich (221) umfasst; und
ein Dichtungselement (30), das mit dem Elektrodenanschluss (20) verbunden ist, wobei das Dichtungselement (30) auf einer Seite der Elektrodenbaugruppe (10) in einer zweiten Richtung (Y) angeordnet ist, und die erste Richtung (X) rechtwinklig zur zweiten Richtung (Y) ist; wobei
sich der Elektrodenanschluss (20) in einer Erstreckungsrichtung des Elektrodenanschlusses (20) von der Elektrodenbaugruppe (10) weg erstreckt und der erste Verbindungsbereich (211) eine erste Kante (2111) entfernt von dem Dichtungselement (30) und eine zweite Kante (2112) nahe dem Dichtungselement (30) umfasst; der zweite Verbindungsbereich (221) eine dritte Kante (2211) entfernt von dem Dichtungselement (30) und eine vierte Kante (2212) nahe dem Dichtungelement (30) umfasst; und in der Erstreckungsrichtung des Elektrodenanschlusses (20) der Mindestabstand zwischen der ersten Kante (2111) und der dritten Kante (2211) D₁ ist, der Mindestabstand zwischen der zweiten Kante (2112) und der vierten Kante (2212) D₂ ist, und mindestens einer von D₁ oder D₂ größer als 0 ist.

2. Sekundärbatterie (100) nach Anspruch 1, **dadurch gekennzeichnet, dass** D₁>0 und D₂>0.

3. Sekundärbatterie (100) nach Anspruch 2, **dadurch gekennzeichnet, dass** in der Erstreckungsrichtung des Elektrodenanschlusses (20) eine Länge des ersten Verbindungsbereichs (211) L₁ ist, eine Länge des zweiten Verbindungsbereichs (221) L₂ ist, und L₁>D₁ und L₂>D₁.

4. Sekundärbatterie (100) nach Anspruch 3, **dadurch gekennzeichnet, dass** 0,5 mm ≤L₁≤30 mm und 0,5 mm≤L₂≤30 mm.

5. Sekundärbatterie (100) nach einem der Ansprüche 1 bis 4, **dadurch gekennzeichnet, dass** in der ersten Richtung (X) ein Spalt (23) zwischen dem ersten Abschnitt (21) und dem zweiten Abschnitt (22) vorgesehen ist.

6. Sekundärbatterie (100) nach Anspruch 5, **dadurch gekennzeichnet, dass** in der ersten Richtung (X) die Mindestbreite des Spalts (23) W₁ ist und 5 mm≥W₁≥0,5 mm.

7. Sekundärbatterie (100) nach Anspruch 6, **dadurch gekennzeichnet, dass** die Elektrodenbaugruppe (10) eine Elektrodenplatte (11) umfasst, die Elektrodenplatte (11) einen Stromabnehmer (111) und eine Wirkstoffschicht (112) umfasst und die Wirkstoffschicht (112) auf dem Stromabnehmer (111) angeordnet ist; und
die Wirkstoffschicht (112) mit einer ersten Nut (113) versehen ist; die erste Nut (113) den Stromabnehmer (111) freilegt; mindestens ein Teil des ersten Abschnitts (21) und mindestens ein Teil des zweiten Abschnitts (22) sich in der ersten Nut (113) befinden und mit dem Stromabnehmer (111) der ersten Nut (113) verbunden sind; in der zweiten Richtung (Y) eine Breite der ersten Nut (113) T₁ ist, eine Länge einer orthografischen Projektion des ersten Abschnitts (21) auf der Elektrodenplatte (11) T₂ ist und eine Länge einer orthografischen Projektion des zweiten Abschnitts (22) auf der Elektrodenplatte (11) T₃ ist; wobei T₁-0,5 mm≥T₂≥T₁-5 mm und T₁-0,5 mm≥T₃≥T₁-5 mm.

8. Sekundärbatterie (100) nach einem der Ansprüche 1 bis 7, **dadurch gekennzeichnet, dass** die Elektrodenbaugruppe (10) mit dem ersten Abschnitt (21) und dem zweiten Abschnitt (22) verschweißt ist, eine Vielzahl von ersten Schweißnähten (50) zwischen dem ersten Abschnitt (21) und der Elektrodenbaugruppe (10) vorgesehen sind und sich die Vielzahl von ersten Schweißnähten (50) in dem ersten Verbindungsbereich (211) befinden; und
in der ersten Richtung (X) eine Breite jeder ersten Schweißnaht (50) S₁ ist und 0,5 mm≤S₁≤8 mm.

9. Sekundärbatterie (100) nach Anspruch 8, **dadurch gekennzeichnet, dass** eine Vielzahl von zweiten Schweißnähten (60) zwischen der Elektrodenbaugruppe (10) und dem zweiten Abschnitt (22) vorgesehen sind und sich die Vielzahl von zweiten Schweißnähten (60) in dem zweiten Verbindungsbereich (221) befinden; die Vielzahl von ersten Schweißnähten (50) entlang der Erstreckungsrichtung des Elektrodenanschlusses (20) angeordnet sind, und die Vielzahl von zweiten Schweißnähten (60) entlang der Erstreckungsrichtung des Elektrodenanschlusses (20) angeordnet sind; und
in der Erstreckungsrichtung des Elektrodenanschlusses (20) ein Abstand zwischen zwei beliebigen benachbarten der Vielzahl von ersten Schweißnähten (50) D₃ ist und ein Abstand zwischen zwei beliebigen benachbarten der Vielzahl von zweiten Schweißnähten (60) D₄ ist, wobei 0,5 mm≤D₃≤3 mm und 0,5 mm≤D₄≤3 mm erfüllt wird.

10. Sekundärbatterie (100) nach Anspruch 9, **dadurch gekennzeichnet, dass** in der Erstreckungsrichtung des Elektrodenanschlusses (20) ein Abstand zwischen der zweiten Kante (2112) und dem Dichtungselement (30) kleiner oder gleich einem Abstand zwischen der dritten Kante (2211) und dem Dichtungselement (30) ist; und
in der Erstreckungsrichtung des Elektrodenanschlusses (20) ein Mindestabstand zwischen einem geometrischen Mittelpunkt einer der Vielzahl von ersten Schweißnähten (50), die der zweiten Kante (2112) am nächsten ist, und einem geometrischen Mittelpunkt einer der Vielzahl von zweiten Schweißnähten (60), die der dritten Kante (2211) am nächsten ist, D₅ ist und 0,5 mm≤D₅≤3 mm.

11. Sekundärbatterie (100) nach einem der Ansprüche 1 bis 10, **dadurch gekennzeichnet, dass** die Elektrodenbaugruppe (10) eine Elektrodenplatte (11) umfasst, die Elektrodenplatte (11) einen Stromabnehmer (111) umfasst, der Stromabnehmer (111) eine erste Oberfläche (1111) und eine zweite Oberfläche (1112), die einander gegenüberliegen, umfasst, der erste Abschnitt (21) mit der ersten Oberfläche (1111) verbunden ist, um den ersten Verbindungsbereich (211) zu bilden, und der zweite Abschnitt (22) mit der ersten Oberfläche (1111) verbunden ist, um den zweiten Verbindungsbereich (221) zu bilden; oder wobei die Elektrodenbaugruppe (10) eine Elektrodenplatte (11) umfasst, die Elektrodenplatte (11) einen Stromabnehmer (111) umfasst, der Stromabnehmer (111) eine erste Oberfläche (1111) und eine zweite Oberfläche (1112), die einander gegenüberliegen, umfasst, der erste Abschnitt (21) mit der ersten Oberfläche (1111) verbunden ist, um den ersten Verbindungsbereich (211) zu bilden, und der zweite Abschnitt (22) mit der zweiten Oberfläche (1112) verbunden ist, um den zweiten Verbindungsbereich (221) zu bilden.

12. Sekundärbatterie (100) nach einem der Ansprüche 1 bis 10, **dadurch gekennzeichnet, dass** die Elektrodenbaugruppe (10) eine Vielzahl von aufeinandergestapelten Elektrodenplatten (11) umfasst; jede der Vielzahl von Elektrodenplatten (11) einen Stromabnehmer (111), eine Teillasche (12a) und eine Wirkstoffschicht (112) umfasst; die Teillasche (12a) mit dem Stromabnehmer (111) verbunden ist; und die Wirkstoffschicht (112) auf dem Stromabnehmer (111) angeordnet ist; wobei
die Teillaschen (12a) der Vielzahl von Elektrodenplatten (11) gestapelt und verbunden sind, um eine Lasche (12) zu bilden; die Lasche (12) eine dritte Oberfläche (123) und eine vierte Oberfläche (124), die einander gegenüberliegen, umfasst; der erste Abschnitt (21) mit der dritten Oberfläche (123) verbunden ist, um den ersten Verbindungsbereich (211) zu bilden; und der zweite Abschnitt (22) mit der dritten Oberfläche (123) verbunden ist, um den zweiten Verbindungsbereich (221) zu bilden; oder
wobei die Elektrodenbaugruppe (10) eine Vielzahl von aufeinandergestapelten Elektrodenplatten (11) umfasst; jede der Vielzahl von Elektrodenplatten (11) einen Stromabnehmer (111), eine Teillasche (12a) und eine Wirkstoffschicht (112) umfasst; die Teillasche (12a) mit dem Stromabnehmer (111) verbunden ist; und die Wirkstoffschicht (112) auf dem Stromabnehmer (111) angeordnet ist; wobei
die Teillaschen (12a) der Vielzahl von Elektrodenplatten (11) gestapelt und verbunden sind, um eine Lasche (12) zu bilden; die Lasche (12) eine dritte Oberfläche (123) und eine vierte Oberfläche (124), die einander gegenüberliegen, umfasst; der erste Abschnitt (21) mit der dritten Oberfläche (123) verbunden ist, um den ersten Verbindungsbereich (211) zu bilden; und der zweite Abschnitt (22) mit der vierten Oberfläche (124) verbunden ist, um den zweiten Verbindungsbereich (221) zu bilden.

13. Sekundärbatterie (100) nach einem der Ansprüche 1 bis 12, **dadurch gekennzeichnet, dass** der Elektrodenanschluss (20) ferner einen dritten Abschnitt (24) umfasst, der dritte Abschnitt (24) den ersten Abschnitt (21) und den zweiten Abschnitt (22) verbindet, der dritte Abschnitt (24) mit dem Dichtungselement (30) verbunden ist, und der dritte Abschnitt (24) so eingerichtet ist, dass er mit einer externen Vorrichtung verbunden werden kann.

14. Sekundärbatterie (100) nach einem der Ansprüche 1 bis 13, **dadurch gekennzeichnet, dass** der erste Abschnitt (21) und der zweite Abschnitt (22) getrennt sind und das Dichtungselement (30) den ersten Abschnitt (21) und den zweiten Abschnitt (22) verbindet.

15. Elektronische Vorrichtung, die die Sekundärbatterie (100) nach einem der Ansprüche 1 bis 14 umfasst.

## Revendications

1. Une batterie secondaire (100), **caractérisée en ce que** la batterie secondaire (100) comprend :
un ensemble d'électrodes (10) ;
une borne d'électrode (20), comprenant une première partie (21) et une deuxième partie (22), dans lequel la première partie (21) et la deuxième partie (22) sont disposées dans une première direction (X), la première partie (21) est connectée à l'ensemble d'électrodes (10) et comprend une première région de connexion (211), et la deuxième partie (22) est connectée à l'ensemble d'électrodes (10) et comprend une deuxième région de connexion (221) ; et
un membre d'étanchéité (30) connecté à la borne d'électrode (20), dans lequel le membre d'étanchéité (30) est disposé sur un côté de l'ensemble d'électrodes (10) dans une deuxième direction (Y), et la première direction (X) est perpendiculaire à la deuxième direction (Y) ; dans lequel
dans une direction d'extension de la borne d'électrode (20), la borne d'électrode (20) s'étend loin de l'ensemble d'électrodes (10), et la première région de connexion (211) comprend un premier bord (2111) éloigné du membre d'étanchéité (30) et un deuxième bord (2112) proche du membre d'étanchéité (30) ; la deuxième région de connexion (221) comprend un troisième bord (2211) éloigné du membre d'étanchéité (30) et un quatrième bord (2212) proche du membre d'étanchéité (30) ; et dans la direction d'extension de la borne d'électrode (20), une distance minimale entre le premier bord (2111) et le troisième bord (2211) est D₁, une distance minimale entre le deuxième bord (2112) et le quatrième bord (2212) est D₂, et au moins l'un de D₁ ou D₂ est supérieur à 0.

2. La batterie secondaire (100) selon la revendication 1, **caractérisée en ce que** D₁ > 0 et D₂ > 0.

3. La batterie secondaire (100) selon la revendication 2, **caractérisée en ce que** dans la direction d'extension de la borne d'électrode (20), une longueur de la première région de connexion (211) est L₁, une longueur de la deuxième région de connexion (221) est L₂, et L₁ > D₁ et L₂ > D₁.

4. La batterie secondaire (100) selon la revendication 3, **caractérisée en ce que** 0,5 mm ≤ Li ≤ 30 mm, et 0,5 mm ≤ L₂ ≤ 30 mm.

5. La batterie secondaire (100) selon l'une quelconque des revendications 1 à 4, **caractérisée en ce que** dans la première direction (X), un écartement (23) est prévu entre la première partie (21) et la deuxième partie (22).

6. La batterie secondaire (100) selon la revendication 5, **caractérisée en ce que** dans la première direction (X), une largeur minimale de l'écartement (23) est W₁, et 5 mm ≥ W₁ ≥ 0,5 mm.

7. La batterie secondaire (100) selon la revendication 6, **caractérisée en ce que** l'ensemble d'électrodes (10) comprend une plaque d'électrode (11), la plaque d'électrode (11) comprend un collecteur de courant (111) et une couche de substance active (112), et la couche de substance active (112) est disposée sur le collecteur de courant (111) ; et
la couche de substance active (112) est munie d'une première rainure (113) ; la première rainure (113) expose le collecteur de courant (111) ; au moins une partie de la première partie (21) et au moins une partie de la deuxième partie (22) sont situées dans la première rainure (113) et connectées au collecteur de courant (111) de la première rainure (113) ; dans la deuxième direction (Y), une largeur de la première rainure (113) est T₁, une longueur d'une projection orthogonale de la première partie (21) sur la plaque d'électrode (11) est T₂, et une longueur d'une projection orthogonale de la deuxième partie (22) sur la plaque d'électrode (11) est T₃ ; dans lequel T₁ - 0,5 mm ≥ T₂ ≥ T₁ - 5 mm et T₁ - 0,5 mm ≥ T₃ ≥ T₁ - 5 mm.

8. La batterie secondaire (100) selon l'une quelconque des revendications 1 à 7, **caractérisée en ce que** l'ensemble d'électrodes (10) est soudé à la première partie (21) et à la deuxième partie (22), plusieurs premières marques de soudure (50) sont prévues entre la première partie (21) et l'ensemble d'électrodes (10), et les plusieurs premières marques de soudure (50) sont situées dans la première région de connexion (211) ; et
dans la première direction (X), une largeur de chaque première marque de soudure (50) est S₁, et 0,5 mm ≤ S₁ ≤ 8 mm.

9. La batterie secondaire (100) selon la revendication 8, **caractérisée en ce que** plusieurs deuxièmes marques de soudure (60) sont prévues entre l'ensemble d'électrodes (10) et la deuxième partie (22), et les plusieurs deuxièmes marques de soudure (60) sont situées dans la deuxième région de connexion (221) ;
les plusieurs premières marques de soudure (50) sont agencées le long de la direction d'extension de la borne d'électrode (20), et les plusieurs deuxièmes marques de soudure (60) sont agencées le long de la direction d'extension de la borne d'électrode (20) ; et
dans la direction d'extension de la borne d'électrode (20), une distance entre deux quelconques adjacentes des plusieurs premières marques de soudure (50) est D₃, et une distance entre deux quelconques adjacentes des plusieurs deuxièmes marques de soudure (60) est D₄, satisfaisant 0,5 mm ≤ D₃ ≤ 3 mm et 0,5 mm ≤ D₄ ≤ 3 mm.

10. La batterie secondaire (100) selon la revendication 9, **caractérisée en ce que** dans la direction d'extension de la borne d'électrode (20), une distance entre le deuxième bord (2112) et le membre d'étanchéité (30) est inférieure ou égale à une distance entre le troisième bord (2211) et le membre d'étanchéité (30) ; et
dans la direction d'extension de la borne d'électrode (20), une distance minimale entre un centre géométrique de l'une des plusieurs premières marques de soudure (50) la plus proche du deuxième bord (2112) et un centre géométrique de l'une des plusieurs deuxièmes marques de soudure (60) la plus proche du troisième bord (2211) est D₅, et 0,5 mm ≤ D₅ ≤ 3 mm.

11. La batterie secondaire (100) selon l'une quelconque des revendications 1 à 10, **caractérisée en ce que** l'ensemble d'électrodes (10) comprend une plaque d'électrode (11), la plaque d'électrode (11) comprend un collecteur de courant (111), le collecteur de courant (111) comprend une première surface (1111) et une deuxième surface (1112) opposée l'une à l'autre, la première partie (21) est connectée à la première surface (1111) pour former la première région de connexion (211), et la deuxième partie (22) est connectée à la première surface (1111) pour former la deuxième région de connexion (221) ; ou
dans lequel l'ensemble d'électrodes (10) comprend une plaque d'électrode (11), la plaque d'électrode (11) comprend un collecteur de courant (111), le collecteur de courant (111) comprend une première surface (1111) et une deuxième surface (1112) opposée l'une à l'autre, la première partie (21) est connectée à la première surface (1111) pour former la première région de connexion (211), et la deuxième partie (22) est connectée à la deuxième surface (1112) pour former la deuxième région de connexion (221).

12. La batterie secondaire (100) selon l'une quelconque des revendications 1 à 10, **caractérisée en ce que** l'ensemble d'électrodes (10) comprend plusieurs plaques d'électrodes (11) empilées ensemble ; chacune des plusieurs plaques d'électrodes (11) comprend un collecteur de courant (111), une sous-bobine (12a), et une couche de substance active (112) ; la sous-bobine (12a) est connectée au collecteur de courant (111) ; et la couche de substance active (112) est disposée sur le collecteur de courant (111) ; dans lequel
les sous-bobines (12a) des plusieurs plaques d'électrodes (11) sont empilées et connectées pour former une bobine (12) ; la bobine (12) comprend une troisième surface (123) et une quatrième surface (124) opposée l'une à l'autre ; la première partie (21) est connectée à la troisième surface (123) pour former la première région de connexion (211) ; et la deuxième partie (22) est connectée à la troisième surface (123) pour former la deuxième région de connexion (221) ; ou
dans lequel l'ensemble d'électrodes (10) comprend plusieurs plaques d'électrodes (11) empilées ensemble ; chacune des plusieurs plaques d'électrodes (11) comprend un collecteur de courant (111), une sous-bobine (12a), et une couche de substance active (112) ; la sous-bobine (12a) est connectée au collecteur de courant (111) ; et la couche de substance active (112) est disposée sur le collecteur de courant (111) ; dans lequel
les sous-bobines (12a) des plusieurs plaques d'électrodes (11) sont empilées et connectées pour former une bobine (12) ; la bobine (12) comprend une troisième surface (123) et une quatrième surface (124) opposée l'une à l'autre ; la première partie (21) est connectée à la troisième surface (123) pour former la première région de connexion (211) ; et la deuxième partie (22) est connectée à la quatrième surface (124) pour former la deuxième région de connexion (221).

13. La batterie secondaire (100) selon l'une quelconque des revendications 1 à 12, **caractérisée en ce que** la borne d'électrode (20) comprend en outre une troisième partie (24), la troisième partie (24) connecte la première partie (21) et la deuxième partie (22), la troisième partie (24) est connectée au membre d'étanchéité (30), et la troisième partie (24) est configurée pour être connectée à un dispositif externe.

14. La batterie secondaire (100) selon l'une quelconque des revendications 1 à 13, **caractérisée en ce que** la première partie (21) et la deuxième partie (22) sont séparées, et le membre d'étanchéité (30) connecte la première partie (21) et la deuxième partie (22).

15. Un appareil électronique, comprenant la batterie secondaire (100) selon l'une quelconque des revendications 1 à 14.
